**Europäisches Patentamt**

**European Patent Office**

**Office européen des brevets**

(19)

(11) Publication number : **0 264 782 B1**

(12) **EUROPEAN PATENT SPECIFICATION**

(45) Date of publication of patent specification :
14.12.94 Bulletin 94/50

(51) Int. Cl.⁵ : **G10H 1/00**

(21) Application number : **87114944.9**

(22) Date of filing : **13.10.87**

(54) Musical tone control apparatus using a detector.

Divisional application 92110153.1 filed on 13/10/87.

(30) Priority : **25.11.86 JP 280426/86**
**31.10.86 JP 259805/86**
**02.12.86 JP 287392/86**
**22.11.86 JP 279030/86**
**18.11.86 JP 274345/86**
**14.10.86 JP 243348/86**
**22.11.86 JP 279028/86**
**07.11.86 JP 265167/86**
**20.02.87 JP 37295/87**

(43) Date of publication of application :
**27.04.88 Bulletin 88/17**

(45) Publication of the grant of the patent :
**14.12.94 Bulletin 94/50**

(84) Designated Contracting States :
**DE FR GB IT NL SE**

(56) References cited :
**FR-A- 2 543 722**
**GB-A- 2 071 389**
**US-A- 1 661 058**
**US-A- 3 704 339**
**US-A- 3 935 669**
**US-A- 4 635 516**

(73) Proprietor : **YAMAHA CORPORATION**
**10-1, Nakazawa-cho**
**Hamamatsu-shi Shizuoka-ken (JP)**

(72) Inventor : **Hiyoshi, Teruo**
**c/o YAMAHA CORPORATION**
**10-1, Nakazawa-cho**
**Hamamatsu-shi Shizuoka-ken (JP)**
Inventor : **Kinpara, Mamoru**
**c/o YAMAHA CORPORATION**
**10-1, Nakazawa-cho**
**Hamamatsu-shi Shizuoka-ken (JP)**
Inventor : **Suzuki, Hideo**
**c/o YAMAHA CORPORATION**
**10-1, Nakazawa-cho**
**Hamamatsu-shi Shizuoka-ken (JP)**
Inventor : **Nakada, Akira**
**c/o YAMAHA CORPORATION**
**10-1, Nakazawa-cho**
**Hamamatsu-shi Shizuoka-ken (JP)**
Inventor : **Aoki, Eiichiro**
**c/o YAMAHA CORPORATION**
**10-1, Nakazawa-cho**
**Hamamatsu-shi Shizuoka-ken (JP)**
Inventor : **Sakama, Masao**
**c/o YAMAHA CORPORATION**
**10-1, Nakazawa-cho**
**Hamamatsu-shi Shizuoka-ken (JP)**

(74) Representative : **Kehl, Günther, Dipl.-Phys. et al**
**Patentanwälte**
**Hagemann & Kehl**
**Postfach 86 03 29**
**D-81630 München (DE)**

# Description

The present invention generally relates to a musical tone control apparatus using a detector, and more particularly to a musical tone control apparatus which controls a musical tone in response to a movement of a player and the like detected by a detector.

Conventionally, musical tones are generated by playing a natural musical instrument (such as a violin, a piano, an organ and a bass drum) and an electronic musical instrument and the like. In such musical instruments, a tone pitch and a tone color of the generating musical tone is controlled by touching or depressing keys, strings or pedals by use of hands or feet of the player.

UK-A-2 071 389 discloses an automatic performing apparatus having a baton and a memory. Tone data used for automatic performance are stored in the memory. When the baton is swung, the "tempo clock signal" is controlled based on the variation of the movement of the baton. The tone data are sequentially read out from the memory in synchronization with the tempo clock signal which is controlled as above. In this manner, the speed of the automatic performance is controlled based on the swing operation of the baton.

It is a primary object of the invention to provide a musical tone control apparatus which controls the musical tones based on the movement of the player such as the swing angle or the swing speed of the player's hand.

It is another object of the invention to provide an apparatus which generates artificial musical tones corresponding to natural tones generated by the player.

It is further object of the invention to provide a detector which detects the movement of the player and an impulse given to the player's hand and the like.

These objects are achieved by a musical tone control apparatus according to claim 1 and claim 21.

Further objects and advantages of the present invention will be apparent from the following description, reference being had to the accompanying drawings wherein preferred embodiments of the present invention are clearly shown.

In the drawings:

Fig. 1 is a circuit diagram showing an embodiment of a musical tone generating apparatus employing an impulse detector according to the present invention;

Figs. 2(a) to 2(i) show waveforms at several points in the impulse detector shown in Fig. 1;

Fig. 3 is a circuit diagram showing an embodiment of a motion detector according to the present invention;

Figs. 4(a) to 4(f) show waveforms at several points within the motion detector shown in Fig. 3;

Fig. 5 is a block diagram showing an embodiment of a musical tone generating apparatus employing the motion detector shown in Fig. 3;

Fig. 6 is a block diagram showing an embodiment of a musical tone generating apparatus employing an angular velocity detector according to the present invention;

Fig. 7 shows an appearance of a player who is mounted by the angular velocity detector shown in Fig. 6;

Fig. 8 shows another appearance of a player who is mounted by a modified embodiment of the angular velocity detector according to the present invention;

Fig. 9 is a perspective view showing an appearance of an embodiment of an angle sensor 301 according to the present invention;

Fig. 10 is a partially cutaway view in perspective of the angle sensor 301;

Fig. 11 is a sectional view of the angle sensor 301;

Fig. 12 is a perspective view showing detectors 304 arranged in the inside of the angle sensor 301;

Fig. 13 is a circuit diagram showing an electric constitution of the detector 304;

Fig. 14 is a block diagram showing an embodiment of an electronic musical instrument employing the angle sensor 301;

Fig. 15 is a sectional view showing a modified embodiment of the angle sensor according to the present invention;

Fig. 16 is a block diagram showing a first embodiment of a musical tone generating apparatus according to the present invention;

Fig. 17 shows an appearance of a drum stick used in the musical tone generating apparatus shown in Fig. 16;

Figs. 18(a) to 18(f) show waveforms at several points within the musical tone generating apparatus shown in Fig. 16;

Fig. 19 shows a waveform for explaining a detecting principle in an acceleration increasing period;

Figs. 20A and 20B are flowcharts for explaining operations of a musical tone processing circuit 460 shown in Fig. 16;

Fig. 21 shows a waveform for explaining a musical tone control of the musical tone processing circuit 460;

Figs. 22A and 22B respectively show examples of playing states of a player;

Fig. 23 shows an example of appearance of the player who is mounted with the musical tone generating apparatus using the angle sensor;

Fig. 24 is a perspective view showing an example of a mechanical constitution of the angle sensor;

Fig. 25 shows an appearance of the angle sensor which is mounted at a player's elbow;

Fig. 26 shows another example of appearance of the player who is mounted with a modified musical tone generating apparatus using another angle sensor;

Fig. 27 is a perspective view of a still another angle sensor which is mounted in a glove;

Fig. 28 is a sectional view showing the angle sensor shown in Fig. 27 which is mounted at a finger tip portion of the glove;

Referring now to the drawings, wherein like reference characters designate like or corresponding parts throughout the several views.

The present invention relates to a musical tone control apparatus which controls the musical tones based on the movement of the object such as a player's hand and the like. This movement of the player's hand, such as a moving speed, a moving force or a moving angle of the object, must be detected by a detector. Hence, first description will be given with respect to [I] DETECTOR, and next description will be given with respect to [II] MUSICAL TONE GENERATING APPARATUS.

## [I] DETECTOR

The detector according to the present invention can be classified into an impulse detector, a motion detector, an angular velocity detector and an angle sensor. Hence, description will be given with respect to these detectors and the sensor sequentially.

## (1) IMPULSE DETECTOR

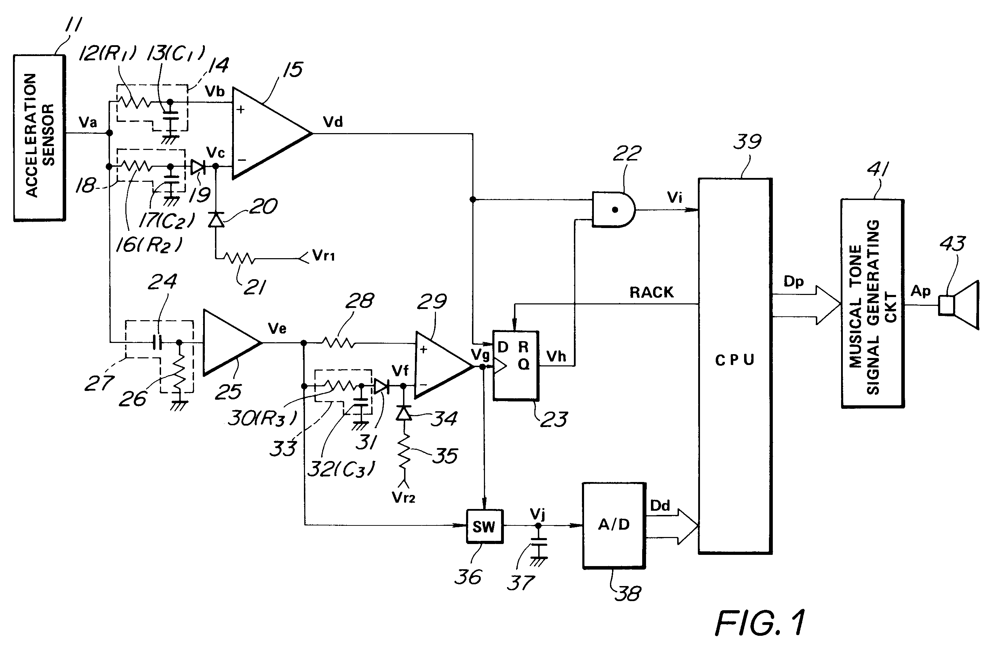

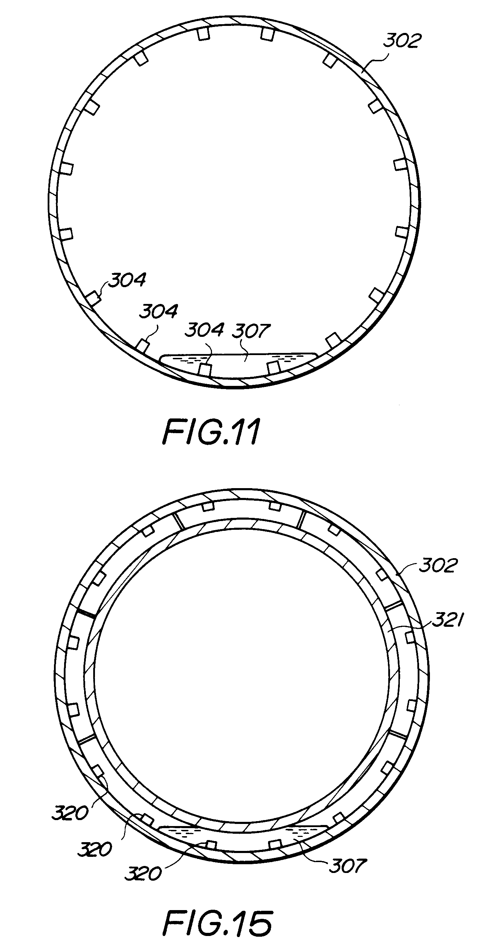

Fig. 1 shows a circuit constitution of an embodiment of the musical tone generating apparatus employing the impulse detector according to the present invention. In Fig. 1, 11 designates an acceleration sensor which has a vibrator made of an organic material or an inorganic material having piezoelectric characteristics. As such organic material, a piezoplastic and the like are used. As such inorganic material, a crystal, a Rochelle salt, a barium titanate and the like are used. In the present embodiment, the piezoplastic is used as an organic vibrator, the circumference of which is fixed so that the vibrator has a diaphragm structure.

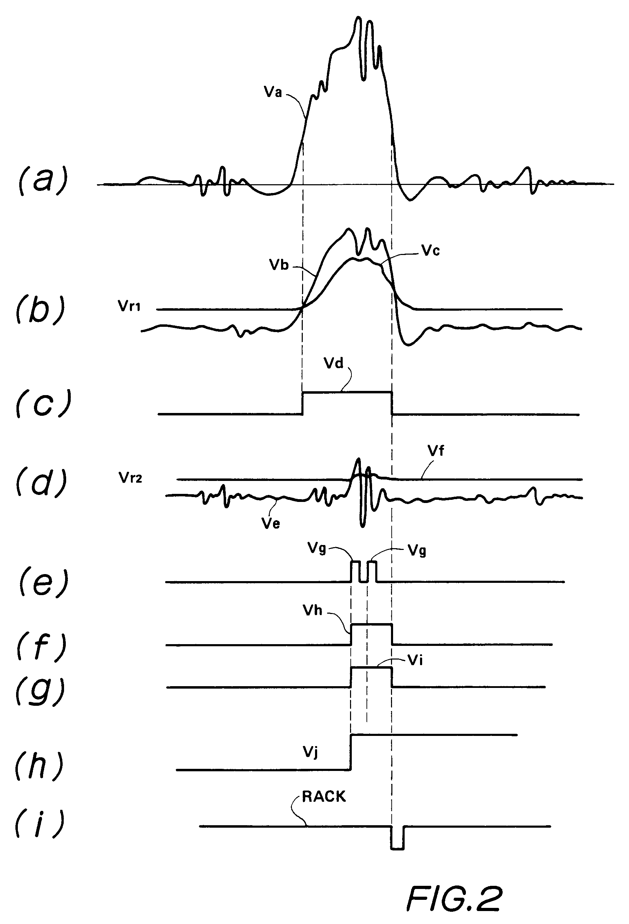

The above-mentioned acceleration sensor 11 converts the acceleration into the voltage signal, hence, the acceleration sensor 11 generates and outputs an output voltage $V_a$ as shown in Fig. 2(a). Next, 12 in Fig. 1 designates a resistor having a resistance of $R_1$ (Ohm), and one terminal of the resistor 12 is connected to an output terminal of the acceleration sensor 11. In addition, 13 designates a capacitor having a capacitance of $C_1$ (F), another terminal of the resistor 12 is grounded via the capacitor 13. These resistor 12 and capacitor 13 constitute a lowpass filter 14 having a time constant of $R_1C_1$ (seconds). The connection point between the resistor 12 and the capacitor 13 is connected to a non-inverting input terminal (+) of a comparator 15. Similar to the resistor 12, one terminal of a resistor 16 having a resistance of $R_2$ (Ohm) is connected to the output terminal of the acceleration sensor 11, and another terminal of the resistor 16 is grounded via a capacitor 17 having a capacitance of $C_2$. These resistor 16 and capacitor 17 constitute a lowpass filter 18 having a time constant of $R_2C_2$ (seconds). In the present embodiment, the time constant $R_2C_2$ is set approximately ten times of the time constant $R_1C_1$ More concretely, the time constant $R_2C_2$ is set equal to 0.5 milli-second and the time constant $R_1C_1$ is set equal to 50 micro-seconds.

The connection point between the resistor 16 and the capacitor 17 is connected to an anode of a diode 19, and an inverting input terminal (-) of the comparator 15 is connected to a cathode of the diode 19. Similar to the diode 19, a cathode of a diode 20 is connected to the inverting input terminal of the comparator 15. One terminal of a resistor 21 is connected to an anode of the diode 20, hence, the diode 20 and the resistor 21 constitutes a serial circuit which supplies a reference voltage $V_{r1}$ to the inverting input terminal of the comparator 15.

One terminal of a capacitor 24 is connected to the output terminal of the acceleration sensor 11, and another terminal of the capacitor 24 is connected to an input terminal of an amplifier 25 which is grounded via a resistor 26. The resistor 26 and the capacitor 24 constitute a highpass filter 27.

One terminal of a resistor 28 is connected to the output terminal of the amplifier 25, and another terminal of the resistor 28 is connected to a non-inverting input terminal (+) of a comparator 29. In addition, one terminal of a resistor 30 having a resistance of $R_3$ (which is provided at an inverting input terminal (-) side of the comparator 29) is connected to the output terminal of the amplifier 25. Another terminal of the resistor 30 is connected to an anode of a diode 31 and is also grounded via a capacitor 32 having a capacitance of $C_3$ The resistor 30 and the capacitor 32 constitute a lowpass filter 32 having a time constant of $R_3C_3$. A cathode of diode 31 is connected to the inverting input terminal of the comparator 29. Similar to the diode 31, a cathode of diode 34 is connected to the inverting input terminal of the comparator 29, whereas an anode of diode 34 is connected to one terminal of a resistor 35. The diode 34 and the resistor 35 constitute a serial circuit which supplies a reference voltage $V_{r2}$ to the inverting input terminal of the comparator 29.

Meanwhile, 22 designates an AND gate having two input terminals, one of which is connected to the output terminal of the comparator 15. In addition, a data input terminal D of a D flip-flop 23 is connected to the output terminal of the comparator 15, and a clock input terminal of the D flip-flop 23 is connected to the output terminal of the comparator 29. Furthermore, the D flip-flop 23 has a reset terminal R, and an output terminal Q of the D flip-flop 23 is connected to another input terminal of the AND gate 22. This D flip-flop 23 stores data supplied to the data input terminal D thereof at a leading edge timing of a pulse signal supplied to the clock input terminal thereof.

Next, an input terminal of an analog switch 36 is connected to the output terminal of the amplifier 25, and a gate terminal of the analog switch 36 is connected to the output terminal of the comparator 29. And an output terminal of the analog switch 36 is connected to an input terminal of an analog-to-digital (A/D) converter 38 which is grounded via a capacitor 37. This capacitor 37 is provided for holding a peak value of an analog signal supplied to the A/D converter 38 via the analog switch 36.

Next, a central processing unit (CPU) 39 is connected to the output terminal of the AND gate 22, the reset terminal R of the D flip-flop 23 and a digital output terminal of the A/D converter 38. The CPU 39 outputs data $D_p$ to a musical tone signal generating circuit 41 wherein a musical tone signal $A_p$ corresponding to the data $D_p$ is generated. The musical tone signal $A_p$ is supplied to a speaker 43 wherein a musical tone corresponding to the musical tone signal $A_p$ is generated.

Next, description will be given with respect to an operation of the musical tone generating apparatus shown in Fig. 1 in conjunction with Fig. 2. The acceleration sensor 11 is mounted on a part of the player, i.e., a palm of the player's hand, for example. This acceleration sensor 11 generates the voltage signal $V_a$ shown in Fig. 2(a) at a timing when the player claps his hands. Such signal $V_a$ is inputted to the non-inverting input terminal of the comparator 15 via the lowpass filter 14, and the signal $V_a$ is also inputted to the inverting input terminal of the comparator 15 via the lowpass filter 18. In this case, the non-inverting input terminal of the comparator 15 is supplied with a signal $V_b b$ (shown in Fig. 2(b)) which is obtained by delaying the signal $V_a$ by a delay time corresponding to the time constant $R_1 C_1$ (sec) of the lowpass filter 14. Similarly, the inverting input terminal of the comparator 15 is supplied with a signal $V_c$ (shown in Fig. 2(b)) which is obtained by delaying the signal $V_a$ by a delay time corresponding to the time constant $R_2 C_2$ (sec) of the lowpass filter 18.

Meanwhile, the diode 19 is inserted between the lowpass filter 18 and the inverting input terminal of the comparator 15. This diode 19 is subject to a bias state in backward direction when the level of the output signal of the lowpass filter 18 is lower than that of the reference voltage $V_{r1}$, whereby the diode 19 is turned off and the reference voltage $V_{r1}$ is supplied to the inverting input terminal of the comparator 15. On the contrary, the diode 19 is subject to a bias state in forward direction when the level of the output signal of the lowpass filter 18 is higher than that of the reference voltage $V_{r1}$, whereby the diode 19 is turned on and the output signal of the lowpass filter 18 is supplied to the inverting input terminal of the comparator 15.

As described before, the time constant $R_1 C_1$ is set smaller than the time constant $R_2 C_2$, hence, the phase of the signal $V_c$ is delayed behind that of the signal $V_b$. As a result, the comparator 15 outputs a pulse signal $V_d$ (shown in Fig. 2(c)), the level of which rises up to a high (H) level while the level of the signal $V_b$ is higher than that of the signal $V_c$. On the other hand, the voltage signal $V_a$ outputted from the acceleration sensor 11 is also supplied to the highpass filter 27 wherein a higher harmonic component signal is extracted from the signal $V_a$. The level of such extracted signal is amplified in the amplifier 25 so that the amplifier 25 outputs a signal $V_e$ as shown in Fig. 2(d).

The signal $V_e$ is supplied to the non-inverting input terminal of the comparator 29 via the resistor 28. In addition, the signal $V_e$ is also supplied to the lowpass filter 33 wherein the signal $V_e$ is subject to a time delay (or an integration operation). As described before, the diode 31 is inserted between the lowpass filter 33 and the inverting input terminal of the comparator 29, and the reference voltage $V_{r2}$ is supplied to the inverting input terminal of the comparator 29. Hence, the reference voltage $V_{r2}$ must be always supplied to the inverting input terminal of the comparator 29 while the level of the output signal of the lowpass filter 33 is lower than that of the reference voltage $V_{r2}$. On the contrary, the output signal of the lowpass filter 33 is supplied to the inverting input terminal of the comparator 29 while the level of the output signal of the lowpass filter 33 is higher than that of the reference voltage $V_{r2}$. As a result, a signal $V_f$ shown in Fig. 2(d) is inputted into the inverting input terminal of the comparator 29.

Thus, the comparator 29 outputs a pulse signal $V_g$ having the H level (as shown in Fig. 2(e)) while the level of the signal $V_e$ is higher than that of the signal $V_f$.

The above-mentioned signal $V_g$ is supplied to the clock input terminal of the D flip-flop 23 as the clock signal. Since the signal $V_d$ (shown in Fig. 2(c)) is supplied to the data input terminal D of the D flip-flop 23, the D flip-flop 23 stores the signal $V_d$ at a leading edge timing of the signal $V_g$ and outputs an output signal $V_h$ (shown in Fig. 2(f)) via an output terminal Q thereof. The logical product of the signals $V_h$ and $V_d$ is obtained in the AND gate 22. Hence, the AND gate 22 outputs a signal $V_i$ (shown in Fig. 2(g)). This signal $V_i$ is supplied to the CPU 39 as an interrupt signal.

On the other hand, when the signal $V_g$ is outputted from the comparator 29, the analog switch 36 is turned on. For this reason, the capacitor 37 is charged by the signal $V_e$, and the peak value of the signal $V_e$ is held by the capacitor 37. Fig. 2(h) shows a waveform of a voltage signal $V_j$ held by the capacitor 37. Such voltage signal $V_j$ is converted into the corresponding digital data $D_d$ in the A/D converter 38, and such digital data $D_d$ are supplied to the CPU 39.

The interrupt signal $V_i$ is supplied to the CPU 39 wherein a signal RACK (shown in Fig. 2(i)) is generated and outputted to the reset terminal R of the D flip-flop 23, whereby the D flip-flop 23 is reset. Thereafter, the CPU 39 stores the digital data $D_d$ outputted from the A/D converter 38. Next, the CPU 39 converts the stored digital data $D_d$ into tone pitch data $D_p$ designating the tone pitch of the musical tone, and the tone pitch data $D_p$ are supplied to the musical tone signal generating circuit 41. The musical tone signal generating circuit 41 generates the musical tone signal designating the tone pitch corresponding to the tone pitch data $D_p$. This musical tone signal is outputted to the speaker 43, whereby the speaker 43 generates the musical tone having the tone pitch corresponding to the intensity of the impulse given to the acceleration sensor 11 mounted on the player's hand.

As described before, the acceleration sensor 11 can be fixed at a predetermined part of the player. According to the constitution of the present embodiment, it is possible to generate a musical tone having a tone pitch corresponding to an intensity of hand clapping, an intensity of step shock occurred between a floor and the feet of the player.

In addition, the present embodiment generates the musical tone having the tone pitch corresponding to the intensity of impulse detected by the acceleration sensor 11. However, the impulse detector according to the present invention is not limited to the present embodiment. For example, it is possible to constitute the impulse detector so that a volume or the tone color of the musical tone is varied in response to the intensity of impulse.

Furthermore, it is possible to constitute the impulse detector so that the tone colors of the musical tones are controlled independently based on the signal $V_b$ (shown in Fig. 2(b)) and the signal $V_e$ (shown in Fig. 2(d)). For example, a musical tone of the bass drum can be controlled by the signal $V_b$, and another musical tone of a cymbal can be controlled by the signal $V_e$. In such a constitution, two kinds of musical tones can be controlled by use of only one detector (i.e., only one acceleration sensor 11).

As described heretofore, the impulse detector according to the present invention can eliminate detecting errors caused by touching noise and the like, and the present impulse detector can detect the intensity of impulse with accuracy.

## (2) MOTION DETECTOR

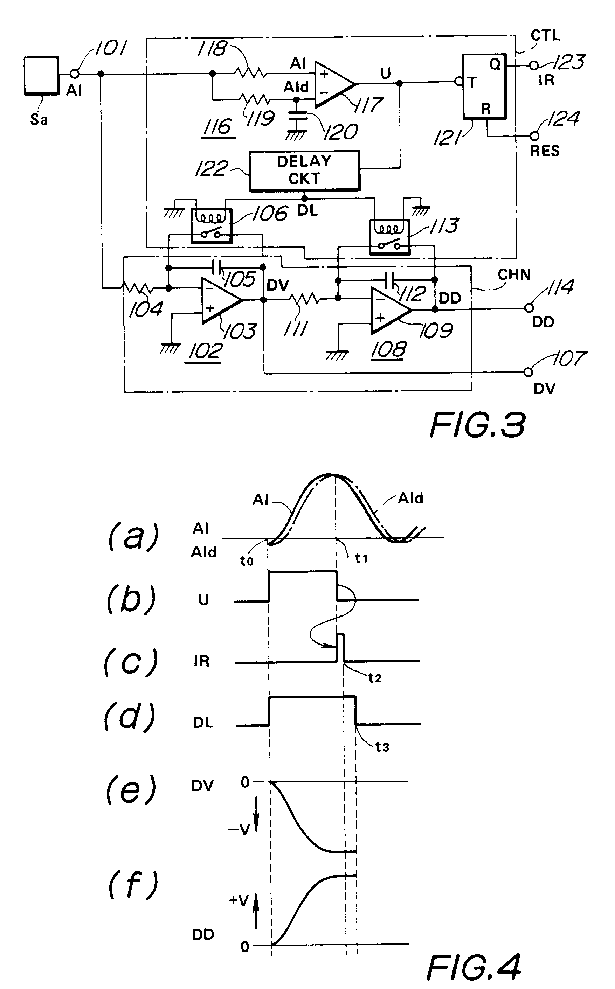

Fig. 3 is a circuit diagram showing an embodiment of a motion detector according to the present invention. More specifically, the circuit shown in Fig. 3 generates signals corresponding to a speed and a moving distance of an object to be detected by integrating an output signal of an acceleration sensor.

In Fig. 3, 101 designates an input terminal which is supplied with an acceleration signal AI outputted from a piezoelectric type acceleration sensor $S_a$.

Meanwhile, a resistor 104 is inserted between the input terminal 101 and an inverting input terminal (-) of an operational amplifier 103, and a capacitor 105 is inserted between the inverting input terminal and the output terminal of the operational amplifier 103. In addition, a non-inverting input terminal (+) of the operational amplifier 103 is grounded. The output terminal of the operational amplifier 103 is connected to a terminal 107 and also connected to an inverting input terminal (-) of an operational amplifier 109 (the non-inverting input terminal of which is grounded) via a resistor 111. The above-mentioned operational amplifier 103, the resistor 104 and the capacitor 105 constitute an integration circuit 102. Both terminals of the capacitor 105 are connected to respective contacts of a reed relay 106.

Similar to the integration circuit 102, the operational amplifier 109, the resistor 111 and a capacitor 112 constitute an integration circuit 108. The output terminal of the integration circuit 108 (i.e., the connection point between the operational amplifier 109 and the capacitor 112) is connected to a terminal 114. Both terminals of the capacitor 112 are connected to respective contacts of a reed relay 113. Both of one terminals of the reed relays 106 and 113 are connected to an output terminal of a delay circuit 122, and both of another terminals of the reed relays 106 and 113 are grounded. In this case, it is possible to replace the reed relays 106 and 113 by semiconductor switches.

The above-mentioned integration circuits 102 and 108 constitute a data converting section CHN.

Next, a non-inverting input terminal of a comparator 117 is connected to the input terminal 101 via a resistor 118. In addition, an inverting input terminal of the comparator 117 is connected to the input terminal 101 and also grounded via a capacitor 120. In this case, the resistor 119 and the capacitor 120 constitute an integration circuit which generates a signal AId by delaying the acceleration signal AI. The output terminal of the comparator 117 is connected to an input terminal T of a flip-flop 121 and also connected to an input terminal of the delay circuit 122.

The above-mentioned comparator 117, the resistors 118 and 119, and the capacitor 120 constitute a phase-shift/peak-detection circuit 116.

This phase-shift/peak-detection circuit 116 compares the level of the acceleration signal AI (which is supplied to the input terminal 101) and that of the signal AId (which is obtained by delaying the acceleration signal AI) and outputs a pulse signal corresponding to the comparing result thereof. For example, when the acceleration signal AI (shown in Fig. 4(a)) is supplied to the input terminal 101 at a time $t_0$, the acceleration signal AI is supplied to the non-inverting input terminal of the comparator 117 via the resistor 118. In addition, the signal AId (as shown by a dashed line in Fig. 4(a)) is generated by delaying the signal AI in the integration circuit (which is constituted by the resistor 119 and the capacitor 120), and this signal AId is supplied to the inverting input terminal of the comparator 117. As a result, the comparator 117 compares the levels of the signals AI and AId, and an output signal U (shown in Fig. 4(b)) of the comparator 117 becomes identical to a "1" signal (i.e., a signal having a logical level "1") during times $t_0$ to $t_1$ while the level of the acceleration signal AI is larger than that of the signal AId. As shown in Fig. 4(a), the time $t_1$ is almost identical to a peak time when the level of the acceleration signal AI reaches at a peak level. More specifically, the signal AId is identical to a delay signal of the acceleration signal AI, hence, a time when the level of the signal AId becomes larger than that of the acceleration signal AI must be delayed behind the peak time of the acceleration signal AI. However, it is possible to identify the peak time of the acceleration signal AI with the time when the level of the signal AId becomes larger than that of the acceleration signal AI by properly setting the delay time of the signal AId smaller.

Next, the output signal of the flip-flop 121 is inverted at every time when the level of the input signal U thereof falls down. This flip-flop 121 has an output terminal Q which is connected to a terminal 123 and a reset terminal R which is connected to a terminal 124. The flip-flop 121 outputs a signal IR (shown in Fig. 4(c)) to an external device which outputs a reset signal RES so as to reset the flip-flop 121 when the signal IR rises up to the "1" signal.

The delay circuit 122 delays a trailing edge timing of the signal U so as to enlarge the pulse width of the signal U. As shown in Fig. 4(d), the trailing edge timing $t_3$ of an output signal DL of the delay circuit 122 is delayed behind the trailing edge timing $t_1$ of the signal U by 20 micro-seconds to 100 micro-seconds in the present embodiment.

The above-mentioned phase-shift/peak-detection circuit 116, the delay circuit 122 and the flip-flop 121 constitute a data control section CTL.

Next, description will be given with respect to operations of the motion detector shown in Fig. 3 in conjunction with Figs. 4(a) to 4(f).

When the acceleration signal AI is supplied to the input terminal 101, such acceleration signal AI is simultaneously supplied to the data control section CTL and the data converting section CHN.

First, description will be given with respect to the operation of the data control section CTL.

When the acceleration signal AI is supplied to the phase-shift/peak-detection circuit 116 via the input terminal 101, the output signal U of the phase-shift/peak-detection circuit 116 rises up to the "1" signal. Thereafter, the level of the signal U falls down to a "0" signal (i.e., a signal having a logical level "0") at the time $t_1$ when the amplitude of the acceleration signal AI becomes to the maximum value. At the same time, the output signal IR of the flip-flop 121 rises up to the "1" signal, and such "1" signal is supplied to the external device via the terminal 123. As a result, the external device supplies the reset signal RES to the reset terminal R of the flip-flop 121 via the terminal 124, whereby the signal IR falls down to the "0" signal. On the other hand, when the signal U rises up to the "1" signal, the output signal DL of the delay circuit 122 rises up to the "1" signal. The period while the signal DL is at the "1" signal continues by 20 micro-seconds to 100 micro-seconds after the signal U falls down to the "0" signal. Relay coils of the reed relays 106 and 113 are magnetized (in a period between the times $t_0$ to $t_3$) while the signal DL is at the "1" signal. Thus, the contacts of the reed relays 106 and 113 are opened in the period between the times $t_0$ to $t_3$.

Next, description will be given with respect to the operation of the data converting section CHN.

The integration circuits 102 and 108 do not work while the reed relays 106 and 113 are closed. At the time $t_0$ when the acceleration signal AI is supplied to the input terminal 101, the contacts of the reed relays 106 and 113 are opened and the integration circuits 102 and 108 start to work. More specifically, the integration circuit 102 integrate the acceleration signal AI so as to output a signal DV in the period between the times $t_0$ and $t_3$. Since the signal DV is obtained by integrating the acceleration signal AI in an acceleration increasing period between the times $t_0$ to $t_1$, the value of the signal DV represents a maximum speed at a time when the acceleration increasing period for the object to be detected is ended. On the other hand, the integration circuit 108 integrates the output signal DV of the integration circuit 102 while the output signal DL of the delay circuit 122 is at the "1" signal, so that the integration circuit 108 generates a signal DD. Since the signal DD is obtained by integrating the (speed) signal DV, the value of the signal DD represents a moving distance which is measured until the acceleration of the object becomes identical to the maximum.

As described heretofore, the present embodiment detects the acceleration by every minute period based on the acceleration signal AI outputted from the acceleration sensor $S_a$ and performs an integration operation on the detected acceleration in the minute period (i.e., the acceleration increasing period). Hence, the present embodiment can detects characteristics of the motion of the object to be detected.

In addition, the present embodiment can obtain the moving speed and the moving distance of the object to be detected by use of a simple circuit constitution (using three operational amplifiers, one flip-flop and a plurality of resistors, capacitors and reed relays). Hence, the present embodiment can save money.

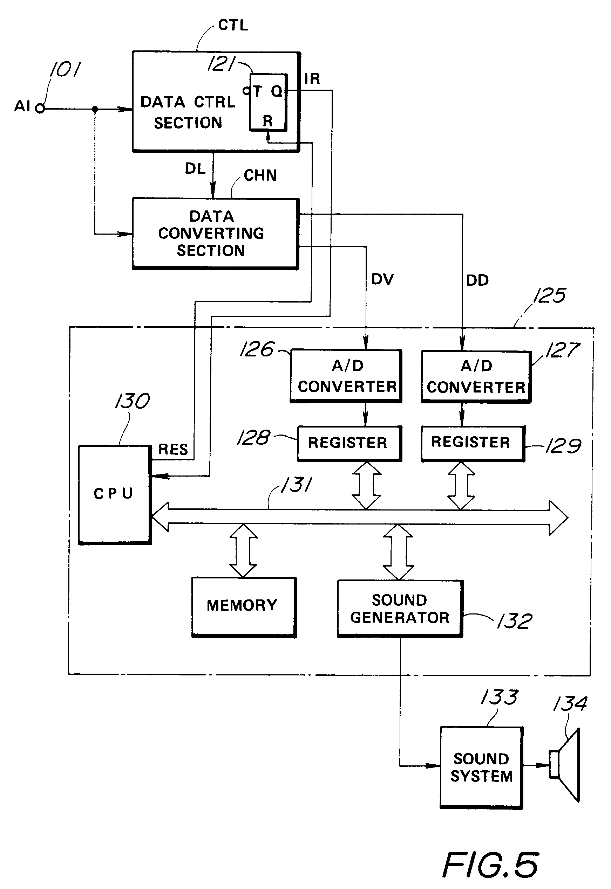

Incidentally, it is possible to apply a musical tone generating unit 125 (as shown in Fig. 5) as an external control device. Next, description will be given with respect to the operation of the circuit shown in Fig. 5.

In Fig. 5, when the flip-flop 121 outputs the signal IR to a central processing unit (CPU) 130 as an interrupt signal, the CPU 130 supplies the reset signal RES to the flip-flop 121. Meanwhile, analog-to-digital converters (A/D converters) 126 and 127 hold the levels of the signals DV and DD at a time $t_2$ (shown in Fig. 4) when the reset signal RES is outputted from the CPU 130. At the same time, the A/D converters 126 and 127 start to convert the held signals DV and DD into respective digital data, and such digital data are stored respectively in the registers 128 and 129. Thereafter, the digital data stored in the registers 128 and 129 are supplied to and stored in the CPU 130 via a data bus 131. Thereafter, the CPU 130 reads out the data stored in the registers 128 and 129 and the read data are supplied to the sound generator 132 via the data bus 131. In this case, the CPU 130 supplies the data stored in the register 128 to the sound generator 132 as volume control data, and the CPU 130 supplies the data stored in the register 129 to the sound generator 132 as tone pitch data. As a result, the sound generator 133 generates and outputs a musical tone signal having a volume and a tone pitch respectively corresponding to the signals DV and DD to a sound system 133. Under the control of the sound system 133, a speaker 134 generates a musical tone corresponding to the signals DV and DD.

The meanings of the above-mentioned signals DV and DD are not limited to the volume and the tone pitch. For example, the signal DV can be modified into a signal for controlling a "regist", and the signal DD can be modified into a signal for controlling a tone color of musical tone (such as tones of a flute, the piano and the like).

The above "regist" represents preset operations of several kinds of levers which are arranged on an operation panel (not shown).

When the regist is controlled by varying the signal DV, the regist condition can be varied in accordance with the movement of the human body and the like. Hence, it is possible to obtain a new musical effect other than the conventional musical effect which is controlled by a manual operation.

(3) ANGULAR VELOCITY DETECTOR

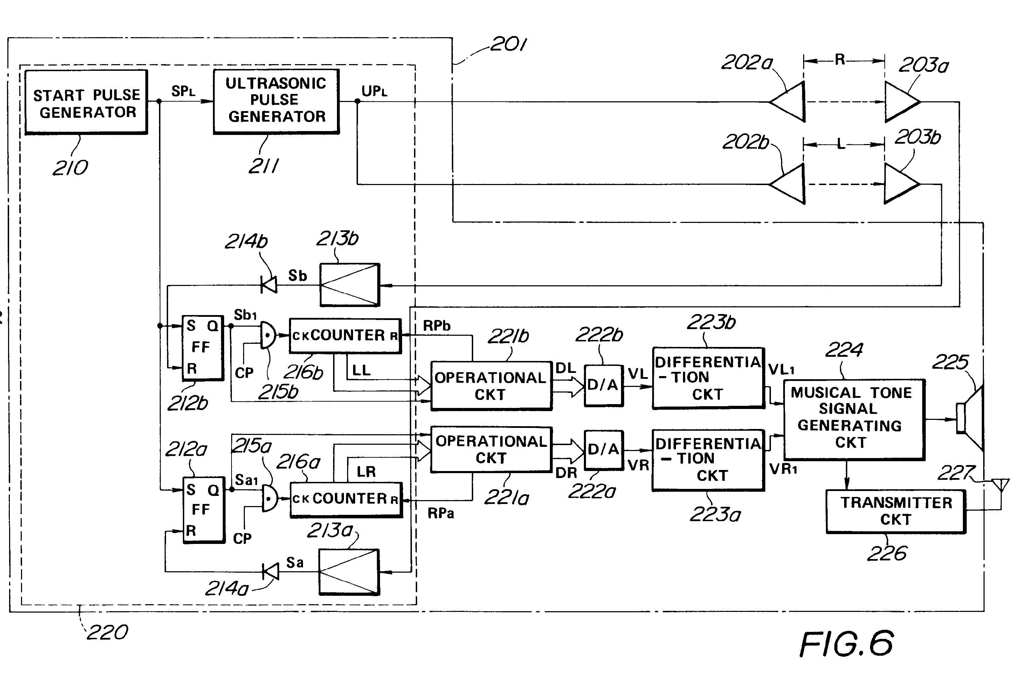

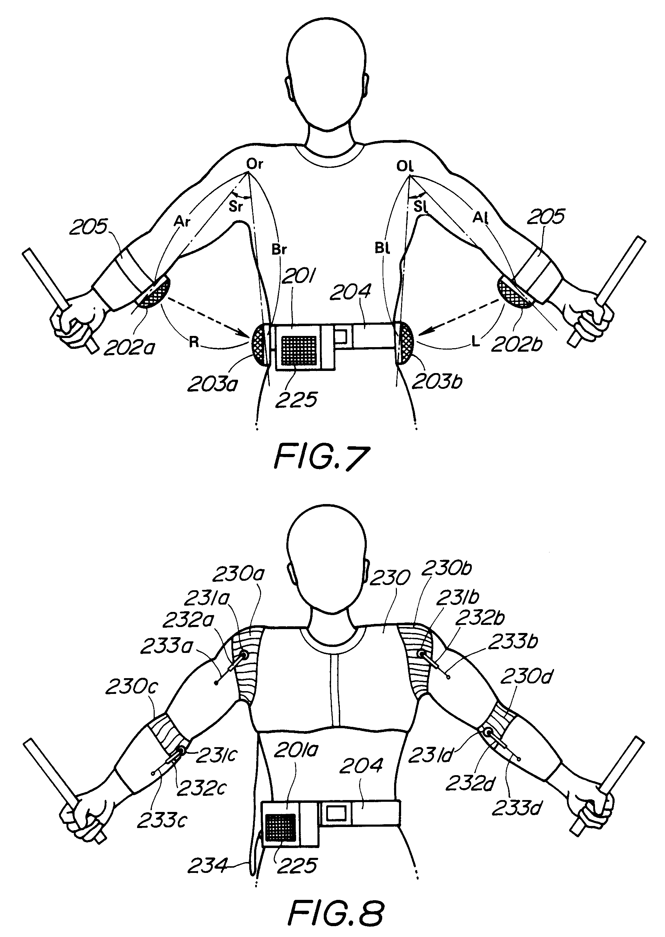

Fig. 6 is a block diagram showing an embodiment of a musical tone generating apparatus employing an angular velocity detector according to the present invention, and Fig. 7 shows a perspective view of the player who wears the musical tone generating apparatus shown in Fig. 6.

In Fig. 6, 201 designates a musical tone generating unit, 202a and 202b designate ultrasonic transmitters, and 203a and 203b designate ultrasonic receivers. As shown in Fig. 7, the musical tone generating unit 201 and the ultrasonic receivers 203a and 203b are worn at a waste of a player by use of a belt 204. The ultrasonic transmitters 202a and 202b are respectively worn at predetermined portions of right and left arms of the player by use of mounting members 205 such as supporters so that the ultrasonic transmitters 202a and 202b respectively face with the ultrasonic receivers 203a and 203b. These ultrasonic transmitters 202a and 202b are constructed by piezoelectric elements such as barium titanate vibrators and the like. When a high frequency voltage is applied to the ultrasonic transmitters 202a and 202b, these ultrasonic transmitters 202a and 202b generate ultrasonic waves. In addition, the ultrasonic receivers 203a and 203b generate the high frequency voltages when these ultrasonic receivers 203a and 203b receives the ultrasonic wave. In this case, two or three transmitting piezoelectric elements are arranged radially within the ultrasonic transmitters 202a and 202b so as to radiate the ultrasonic waves therefrom by an angular range of 180 degrees. Similarly, two or three receiving piezoelectric elements are arranged radially within the ultrasonic receivers 203a and 203b so as to receive and detect the ultrasonic waves radiated from the ultrasonic transmitters 202a and 202b. As a result, even when relative position relations between the ultrasonic transmitters 202a and 202b and the ultrasonic receivers 203a and 203b are changed, the ultrasonic waves radiated from the ultrasonic transmitters 202a and 202b can always reach at the ultrasonic receivers 203a and 203b, regardless of the change of the above relative position relations.

Next, description will be given with respect to the musical tone generating unit 201. In the musical tone generating unit 201, 210 designates a start pulse generator which generates a start pulse $SP_L$ having a constant cycle. This start pulse $SP_L$ is supplied to an input terminal of an ultrasonic pulse generator 211 and respective set input terminals S of reset-set (R-S) flip-flops 212a and 212b. The start pulse $SP_L$ triggers the ultrasonic pulse generator 211 wherein an ultrasonic pulse $UP_L$ is generated and outputted to the ultrasonic transmitters 202a and 202b, whereby the ultrasonic waves having constant cycles are radiated from the ultrasonic transmitters 202a and 202b. When the ultrasonic waves reach at the ultrasonic receivers 203a and 203b, the ultrasonic receivers 203a and 203b generate high frequency voltages respectively.

The high frequency voltage outputted from the ultrasonic receiver 203a is supplied to an amplifier 213a wherein the high frequency voltage is amplified.

Thus, the amplifier 213a outputs an amplified signal Sa to a diode 214a wherein the amplified signal Sa is rectified. Thereafter, the diode 214a outputs the rectified signal of the signal Sa to a reset input terminal R of the R-S flip-flop 212a. This R-S flip-flop 212a is set by the start pulse $SP_L$ and reset by the output signal of the diode 214a. Thus, a signal $Sa_1$ outputted from an output terminal Q of the R-S flip-flop 212a has a pulse width which corresponds to a distance R between the ultrasonic transmitter 202a and the ultrasonic receiver 203a. Such signal $Sa_1$ is supplied to one input terminal of an AND gate 215a. While the signal $Sa_1$ is supplied to the AND gate 215a, this signal $Sa_1$ opens the AND gate 215a wherein a clock pulse CP is passed through and supplied to a clock input terminal CK of a counter 216a. The counter 216a counts up the clock pulse CP and outputs a counting value thereof as distance measuring data LR. The value of such distance measuring data LR corresponds to the distance R between the ultrasonic transmitter 202a and the ultrasonic receiver 203a.

Meanwhile, the high frequency voltage generated by the ultrasonic receiver 203b is supplied to an amplifier 213b wherein the high frequency voltage is amplified. Thus, the amplifier 213b outputs an amplified signal Sb to a diode 214b wherein the signal Sb is rectified. Thereafter, the rectified signal of the signal Sb is supplied to a reset input terminal R of the R-S flip-flop 212b. This R-S flip-flop 212b is set by the start pulse $SP_L$ and reset by the output signal of the diode 214b. Thus, a signal $Sb_1$ outputted from an output terminal Q of the R-S flip-flop 212b has a pulse width which corresponds to a distance L between the ultrasonic transmitter 202b and the ultrasonic receiver 203b. Such output signal $Sb_1$ is supplied to one input terminal of an AND gate 215b. While the signal $Sb_1$ is supplied to the AND gate 215b, the signal $Sb_1$ opens the AND gate 215b wherein the clock pulse CP is passing through and supplied to a clock input terminal CK of a counter 216b. This counter 216b counts up the clock pulse CP and outputs the counting value thereof as distance measuring data LL. The value of such distance measuring data LL corresponds to a distance L between the ultrasonic transmitter 202b and the ultrasonic receiver 203b. As described heretofore, an ultrasonic distance measuring circuit 220 is constituted by the above-mentioned elements.

Next, the above distance measuring data LR and LL are supplied respectively to operational circuits 221a and 221b. These operational circuits 221a and 221b are primarily constituted by read only memories (ROM) which work as look-up tables. More specifically, the operational circuit 221a converts the distance measuring data LR into angle data DR, the value of which corresponds to a revolving angle Sr (shown in Fig. 7) at a joint of a right shoulder of the player. Similarly, the operational circuit 221b converts the distance measuring data LL into angle data DL, the value of which corresponds to a revolving angle Sl at a joint of a left shoulder of the player.

As shown in Fig. 7, Ar represents a distance between a revolving center Or at the joint of the right shoulder of the player and a portion where the ultrasonic transmitter 202a is mounted, and Br represents a distance between the revolving center Or and a portion where the ultrasonic receiver 203a is mounted. In this case, the revolving angle Sr can be obtained from the following formula (1) based on a cosine theorem.

$$Sr = cos^{-1}[(Ar^2 + Br^2 - R^2)/(2 \cdot Ar \cdot Br)] \quad (1)$$

In the case where the values of the distances Ar and Br are set to predetermined constant values in the above formula (1), the value of the revolving angle Sr can be obtained by putting the value of the distance measuring data LR in the place of the distance R. More specifically, the operational circuit 221a provides the ROM which pre-stores the angle data DR therein, and the operational circuit 221a reads out the angle data DR corresponding to the distance measuring data LR which are inputted into the operational circuit 221a as an address for the ROM. Thus, the operation represented by the formula (1) will be performed in the operational circuit 221a.

Similarly, Al represents a distance between a revolving center Ol at the joint of the left shoulder of the player and a portion where the ultrasonic transmitter 202b is mounted, and Bl represents a distance between the revolving center Ol and a portion where the ultrasonic receiver 203b is mounted. In this case, the revolving angle Sl can be obtained from the following formula (2) based on the cosine theorem.

$$Sl = cos^{-1}[(Al^2 + Bl^2 - L^2)/(2 \cdot Al \cdot Bl)] \quad (2)$$

In the case where the values of the distances Al and Bl are set to predetermined constant values in the above formula (2), the revolving angle Sl can be obtained by putting the value of the distance measuring data LL in the place of the distance L. More specifically, the operational circuit 221b provides the ROM which pre-stores the angle data DL therein, and the operational circuit 221b reads out the angle data DL corresponding to the distance measuring data LL which are inputted into the operational circuit 221b as an address for the ROM. Thus, the operation represented by the formula (2) will be performed in the operational circuit 221b.

In addition, the operational circuits 221a and 221b put the respective distance measuring data LR and LL outputted from the counters 216a and 216b therein at leading edge timings of the signals $Sa_1$ and $Sb_1$, i.e., at timings when the R-S flip-flops 212a and 212b are reset. Slightly thereafter, the operational circuits 221a and 221b output respective reset pulses RPa and RPb to reset input terminals R of the counters 216a and 216b so that the counters 216a and 216b are reset. The angle data DR and DL outputted from the operational circuits 221a and 221b are supplied to respective digital-to-analog (D/A) converters 222a and 222b wherein the angle data DR and DL are converted into analog voltage signals VR and VL. Theses voltage signals VR and VL are supplied to respective differentiation circuits 223a and 223b wherein the voltage signals VR and VL are differentiated so as to obtain signals $VR_1$ and $VL_1$ These signals $VR_1$ and $VL_1$ are supplied to a musical tone signal generating circuit 224.

Since the values of the voltage signals VR and VL correspond to the revolving angle Sr at the joint of the right shoulder and the revolving angle Sl at the joint of the left shoulder respectively, the values of the differentiated signals $VR_1$ and $VL_1$ of the voltage signals VR and VL correspond to the respective revolving angles Sr and Sl.

The musical tone signal generating circuit 224 generates percussive tones (such as a drum tone, a cymbal tone and the like) in accordance with a predetermined rhythm pattern having a performance speed corresponding to the values of the signals $VR_1$ and $VL_1$ outputted from the respective differentiation circuits 223a and 223b. In this case, the performance speed is increased in response to the value of the signal $VR_1$, and the performance speed is decreased in response to the value of the signal $VL_1$. In the present embodiment, the performance speed can be increased approximately to = **90**. In other words, the performance speed can be increased such that a quarter note ( ) can be generated by ninty times in one minute. The musical tone signal generated in the musical tone signal generating circuit 224 is supplied to a speaker 225, whereby the speaker 225 generates the percussive tone in accordance with the predetermined rhythm pattern having the performance speed corresponding to revolving angular velocities of the right and left arms of the player. Incidentally, 226 designates a transmitter circuit which transmits the musical tone signal outputted from the musical tone signal generating circuit 226 via an antenna 227 by a radio communication.

As described heretofore, the present embodiment measures the distance R between the ultrasonic transmitter 202a and the ultrasonic receiver 203a and calculates the revolving angle Sr of the right arm with respect to the direction of the player's body based on the measured distance R. Then, the value of the revolving angle Sr is differentiated in the differentiation circuit 223a, so that the value of the revolving angular velocity of the right arm can be obtained. Similarly, the present embodiment measures the distance L between the ultrasonic transmitter 202b and the ultrasonic receiver 203b and calculates the revolving angle Sl of the left arm with respect to the direction of the player's body based on the measured distance L. Then, the value of the revolving angle Sl is differentiated in the differentiation circuit 223b, so that the value of the revolving angular velocity of the left arm can be obtained. Accordingly, it is possible to vary the performance speed of the musical tones in accordance with the revolving angular velocities of the right and left arms of the player.

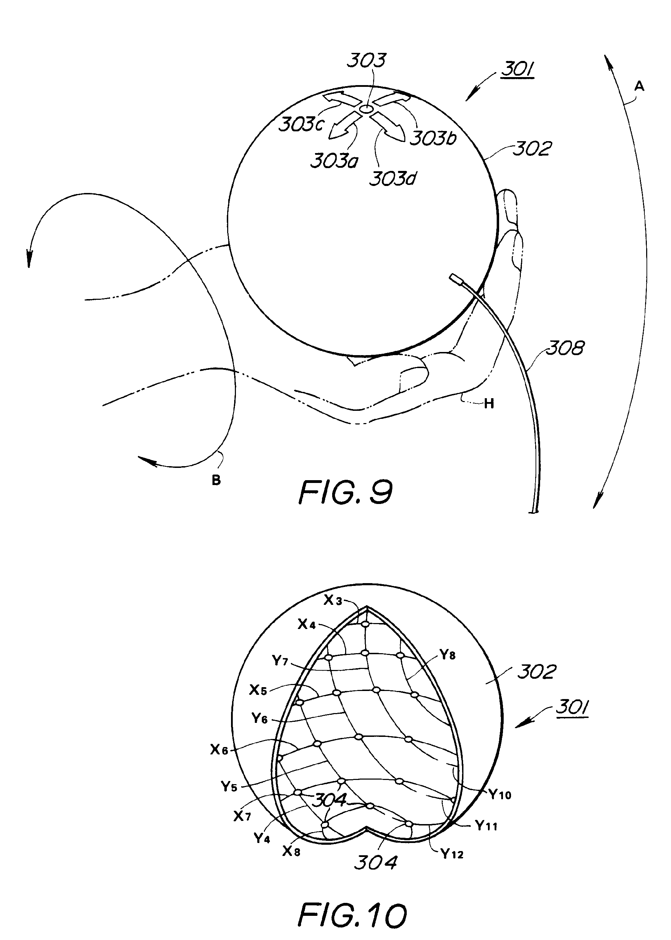

Next, description will be given with respect to another embodiment of the musical tone generating apparatus employing the angular velocity detector according to the present invention in conjunction with Fig. 8.

In Fig. 8, 230 designates a mounting wear covering a breast, shoulders and elbows at an upper half of the player's body. Similar to an ordinary jacket, the mounting wear 230 can be taken off. In addition, shoulder portions 230a and 230b, and elbow portions 230c and 230d of the mounting wear 230 are made of a flexible fiber material. Furthermore, thin type absolute rotary encoders 231a to 231d are mounted respectively in the shoulder portions 230a and 230b, and the elbow portions 230c and 230d. These rotary encoders 231a to 231d have respective shafts fixed with levers 232a to 232d, the tip end portions of which are mounted on the mounting wear 230 via absorber members 233a to 233d. Therefore, when the player revolves his right or left hand, the rotary encoder 231a directly detects the revolving angle of the joint of the right shoulder, or the rotary encoder 231b directly detects the revolving angle of the joint of the left shoulder. On the other hand, in the case where the player bends his right or left elbow, the rotary encoder 231c directly detects the bending angle of the joint of the right elbow, or the rotary encoder 231d directly detects the bending angle of the joint of the left elbow.

Thus, the rotary encoders 231a to 231d output respective angle data (i.e., respective digital signals each having a predetermined bit number) to a musical tone generating unit 201a via a cable 234. The musical tone generating unit 201a is constituted by four digital-to-analog (D/A) converters, four differentiation circuits (both not shown), and the musical tone signal generating circuit 224, the speaker 225 and the transmitter circuit 226 shown in Fig. 6. The above four D/A converters convert the respective angle data (supplied from the rotary encoders 231a to 231d) into analog voltage signals, and these analog voltage signals are differentiated respectively in the four differentiation circuits. In this case, the musical tone signal generating circuit 224 generates a musical tone signal representing a percussive tone having a predetermined rhythm pattern and the performance speed corresponding to the values of voltage signals supplied from the four differentiation circuits.

Therefore, the performance speed will be increased in response to the revolving angular velocity of the joint of the right shoulder, and the performance speed will be decreased in response to the revolving angular velocity of the joint of the left shoulder. In this case, the performance speed can be increased approximately to **=90** in response to the revolving angular velocities of the joints of these shoulders. In addition, the performance speed can be increased in response to the revolving angular velocity of the joint of the right elbow, and the performance speed can be decreased in response to the revolving angular velocity of the joint of the left elbow. In this case, the performance speed can be increase approximately to =150 to 180 in response to the revolving angular velocities of the joints of these elbows.

According to another embodiment described above, it is possible to arbitrarily vary the performance speed of the percussive tones generated from the speaker 225 of the musical tone generating unit 201a in response to the revolving angular velocities of the joints of the shoulders and the elbows. In addition, the rotary encoders 231a and 231b detect the revolving angular velocities of the joints of the right and left shoulders, even when the player revolves his right and left arms in right and left directions or in forward and backward directions. Hence, the player can move freely, so that it is possible to raise the degree of freedom for a dance composition of the player and the like. Furthermore, the rotary encoders 231a to 231d are mounted within the mounting wear 230 like the ordinary jacket, hence, the mounting wear 230 can be made fashionably so that the mounting wear 230 is prevented from damaging the appearance of the player.

In the above-mentioned embodiments, the angle data (digital data) DR and DL are converted into respective analog voltage signals VR and VL, which are differentiated so as to obtain the analog signals $VR_1$ and $VL_1$ the values of which correspond to the revolving angular velocities. Thereafter, these analog signals $VR_1$ and $VL_1$ are supplied to the musical tone signal generating circuit 224 as musical tone control signals. However, it is possible to constitute the musical tone generating apparatus so that difference data are directly obtained from the angle data DR and DL and such difference data (the values of which corresponds to the revolving angular velocities) are supplied to the musical tone signal generating circuit as the musical tone control data. In addition, it is possible to constitute the musical tone generating apparatus so that data of detected revolving angular velocities can be applied to the musical tone control data or predetermined musical tone control data can be formed based on the detected revolving angular velocities.

Meanwhile, the performance speed is varied in response to the revolving angular velocities of player's arms or in response to the revolving angular velocities of the joints of the player's shoulders and the player's elbows in the above-mentioned embodiments. However, it is possible to constitute the present invention such that the tone pitch, the volume, a tone length, the tone color or the like is varied in response to the above revolving angular velocities. In addition, it is possible to constitute the present invention such that musical tone parameters can be controlled by the above revolving angular velocities or the musical tone parameters can be controlled by an arbitrary combination of the above revolving angular velocities.

In addition, the revolving angular velocities of the player's shoulders and the player's elbows are detected in the present embodiments. However, it is possible to detect revolving angular velocities of player's knees in the present invention.

Furthermore, it is unnecessary to provide the musical tone signal generating circuit and the speaker within the musical tone generating unit. Hence, it is possible to constitute the musical tone generating unit such that the musical tone generating unit outputs the musical tone control data therefrom based on the known MIDI (Musical Instrument Digital Interface) standard , for example. In this case, such musical tone control data are supplied to an external musical tone signal generating circuit.

(4) ANGLE SENSOR

Figs. 9 to 13 show an embodiment of an angle sensor 301 according to the present invention.

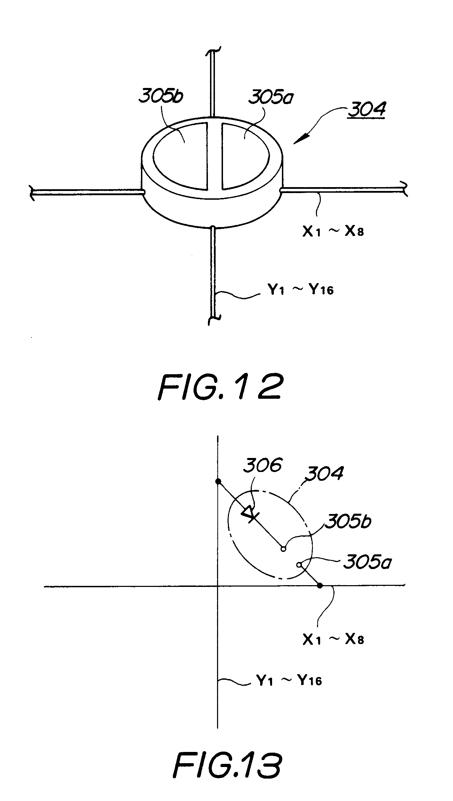

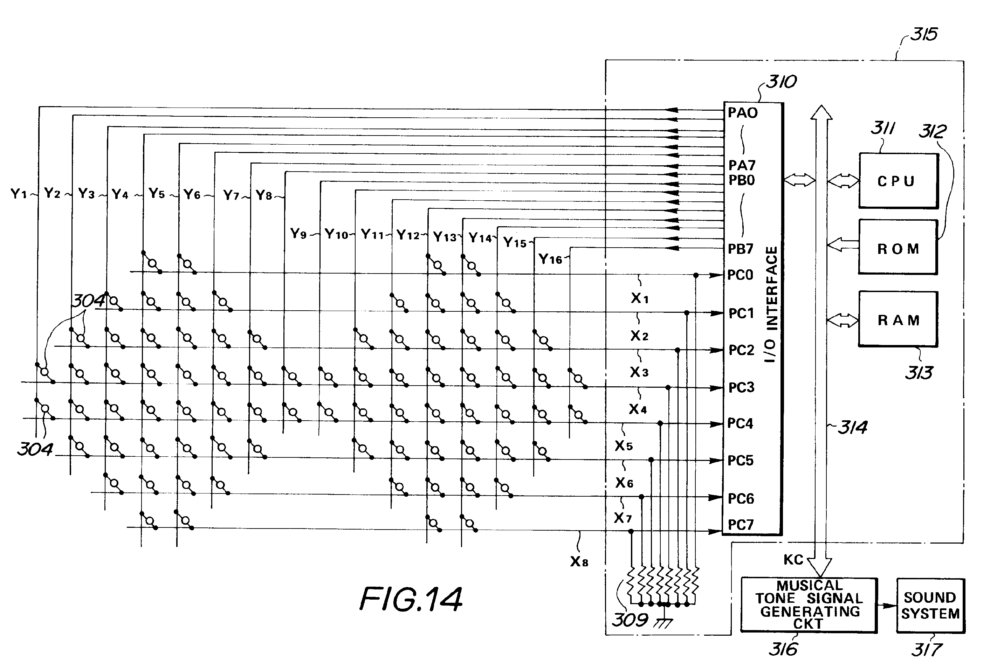

In these Figs. 9 to 13, 302 designates a ball-shaped hollow case. On an outside peripheral surface of the case 302, a circle mark 303 is written as a center position, and arrow marks 303a to 303d are written such that the arrow marks 303a to 303d indicate outer directions from the center position 303. On the other hand, lines $X_1$ to $X_8$ in a X-axis direction and lines $Y_1$ to $Y_{16}$ in a Y-axis direction are wired in a matrix in the inside surface of the case 302 (as shown in Fig. 14). Detectors 304 are provided at intersection points where the lines $X_1$ to $X_8$ cross the lines $Y_1$ to $Y_{16}$. As shown in Fig. 12, the detector 304 has a pair of contacts 305a and 305b on an outside surface thereof and a diode (not shown) in the inside thereof. As shown in Fig. 13, the contact 305a is connected to the lines $X_1$ to $X_8$ directly, and the contact 305b is connected to the lines $Y_1$ to $Y_{16}$ via a diode 306. As shown in Fig. 11, mercury fluid 307 is enclosed within the case 302, hence, the contact 305a can be connected to the contact 305b via the mercury fluid 307 (i.e., the detector 304 is turned on). The lines $X_1$ to $X_8$ and the lines $Y_1$ to $Y_{16}$ are connected to an external device (not shown) via a cable 308 (as shown in Fig. 9).

As shown in Fig. 9, the angle sensor 301 having the above-mentioned constitution is held by a hand H. In the case where the hand H is moved up and down in a direction A or the hand H is twisted in a direction B, the mercury fluid 307 must always moved downward within the case 302. In this case, an inclination of the angle sensor 301 varies the detector 304 which is turned on by the mercury fluid 307. Therefore, an inclination angle of the angle sensor 301 in the direction A and an inclination angle thereof in the direction B can be detected by detecting a combination of turn-on detectors 304 based on a turn-on state among the lines $X_1$ to $X_8$ and the lines $Y_1$ to $Y_{16}$.

Next, description will be given with respect to an electronic musical instrument employing the above-mentioned angle sensor 301 in conjunction with Fig. 14.

In Fig. 14, 309 designates resistors which pull down the lines $X_1$ to $X_8$, and 310 designates an I/O interface having output ports PA and PB connected to the lines $Y_1$ to $Y_{16}$ and an input port PC connected to the lines $X_1$ to $X_8$. In addition, 311 designates a central processing unit (CPU), 312 designates a read only memory (ROM) for storing predetermined programs used for the CPU 311, 313 designates a random access memory (RAM) used for a work area, and 314 designates a bus line. The above-mentioned elements 309 to 314 constitute a musical tone control circuit 315.

The CPU 311 sequentially selects one bit from bits PA0 to PA7 within the output port PA and bits PB0 to PB7 within the output port PB, and the CPU 311 sets a level of the selected one bit to the high (H) level. The "H" level signal is supplied to one of bits PC0 to PC7 within the input port PC via a certain line among the lines $X_1$ to $X_8$ which corresponds to a certain line having the H level among the lines $Y_1$ to $Y_{16}$. Hence, the the CPU 311 can detects that which detector 304 is turned on by monitoring the "H" level signal supplied to the bits PC0 to PC7. In addition, the CPU 311 can determine the inclination angle of the angle sensor 301 in the directions A and B based on the turn-on states of the detectors 304. Accordingly, the CPU 311 generates musical tone control data KC, the content of which corresponds to the inclination angle. The musical tone control data KC are supplied to a musical tone signal generating circuit 316 via the bus line 314. The musical tone signal generating circuit 316 generates a musical tone signal having a tone pitch corresponding to the value of the supplied musical tone control data KC. Such musical tone signal is supplied to a sound system 317 wherein a musical tone corresponding to the musical tone signal is generated.

In the case where the circle mark 303 can be seen at a top position of the angle sensor 301 as shown in Fig. 9, the sound system 317 generates a musical tone having a predetermined reference tone pitch. Thereafter, when the hand H is moved up and down in the direction A or the hand H is twisted in the direction B, the tone pitch of the musical tone generated from the sound system 317 must be varied in response to the moving direction of the angle sensor 301.

As described heretofore, the electronic musical instrument employing the angle sensor 301 can generate musical tones having various tone pitches which corresponds to the inclination of the angle sensor 301. For instance, when the angle sensor 301 held by the player's hand is moved, it is possible to generate various musical tones in response to the movement of the player's hand. Thus, it is possible to enjoy a musical performance based on a brand-new performance method which can not realized by the conventional electronic musical instrument.

Incidentally, it is possible to constitute the present embodiment such that the tone pitch is varied in response to the inclination angle of the angle sensor 301 in the direction A and the tone volume is varied in response to the inclination angle of the angle sensor 301 in the direction B. Furthermore, it is possible to constitute the present embodiment such that the tone color and the like are varied in response to the inclination angle of the angle sensor 301.

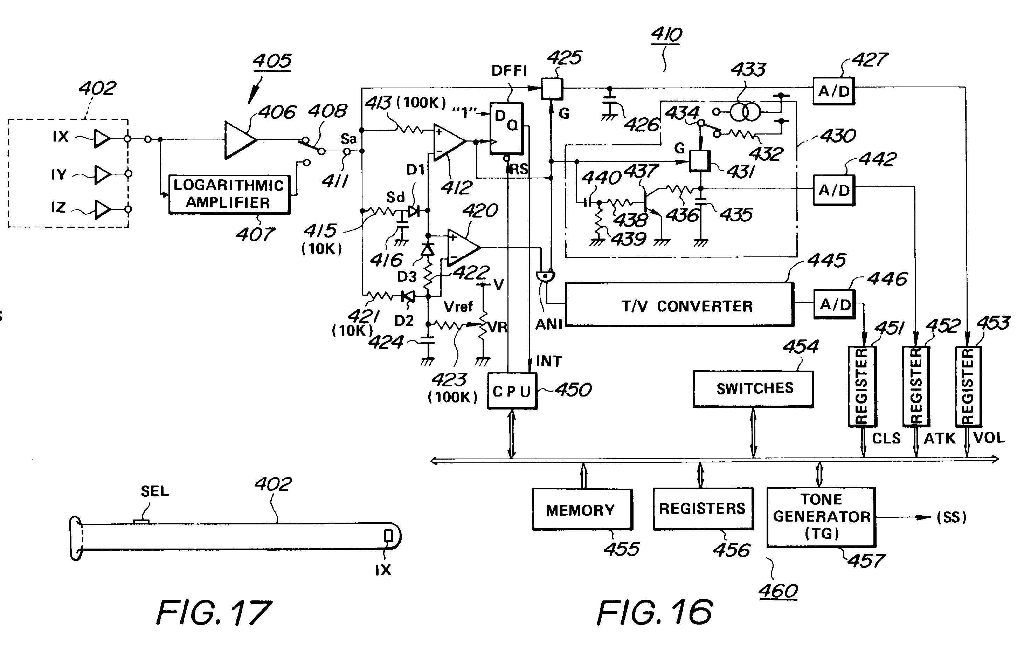

Next, description will be given with respect to a modified embodiment of the present embodiment in conjunction with Fig. 15. In Fig. 15, contacts 320 are provided on the inside surface of the case 302 instead of the detectors 304, and a ball-shaped common electrode 321 is provided in a hollow inside portion of the case 302. Hence, the inclination angle of the case 302 varies a combination of contacts 320 which are connected to the common electrode 321 via the mercury fluid 307.

In the above-mentioned embodiments, the case 302 is shaped like a ball. However, the shape of the case 302 is not limited to the ball shape. Instead, it is possible to form the case as a cylindrical shape.

[II] MUSICAL TONE CONTROL APPARATUS

Next, description will be given with respect to embodiments of the musical tone control apparatus according to the present invention.

(1) CONSTITUTION OF AN EMBODIMENT

Fig. 16 is a block diagram showing a first embodiment of the musical tone control apparatus according to the present invention. In Fig. 16, 1X, 1Y and 1Z designate acceleration sensors which respectively detect accelerations in a X-axis direction, a Y-axis direction and a Z-axis direction. For example, these accelerations sensors 1X to 1Z are constructed by strain gauges which output acceleration signals corresponding to the above predetermined directions. In the first embodiment, these acceleration sensors 1X to 1Z are respectively attached to an edge portion of a drum stick 402 as shown in Fig. 17. Another edge portion of this drum stick 402 is held by the player's hand, hence, a musical tone corresponding to the swing movement will be generated when the player swings the drum stick 402. In addition, a tone color selecting switch SEL is mounted at the another edge portion of the drum stick 402. When the player depresses such switch SEL, a desirable tone color is selected.

Next, description will be given with respect to a circuit for generating a musical tone based on output signals of the acceleration sensors 1X to 1Z. However, since each of the acceleration sensors 1X to 1Z has the same circuit for generating the musical tone, description of the acceleration sensors 1Y and 1Z will be omitted.

In Fig. 16, 405 designates an amplifier section which is constituted by a parallel circuit of a linear amplifier 406 and a logarithmic amplifier 407, and the amplifier section 405 amplifies the output signal of the acceleration sensor 1X. One of the linear amplifier 406 and the logarithmic amplifier 407 is selected by a select switch 408, hence, one of output signals of the linear amplifier 406 and the logarithmic amplifier 407 is supplied to an input terminal 411 of an acceleration peak detecting circuit 410 via the select switch 408. This acceleration peak detecting circuit 410 detects a peak value of the acceleration detected by the acceleration sensor 1X and also detects an acceleration increasing/attenuating duration.

Next, detailed description will be given with respect to the acceleration peak detecting circuit 410. A non-inverting input terminal of a comparator 412 is connected to an input terminal 411 via a resistor 413 (having a resistance of 100 Kilo-Ohm). A resistor 415 (having a resistance of 10 Kilo-Ohm) and a capacitor 416 constitute an integration circuit for delaying an acceleration signal Sa inputted into the input terminal 411, and an output signal of such integration circuit is supplied to an inverting input terminal of the comparator 412 and a non-inverting input terminal of a comparator 420 via a diode D1 in a forward direction. A variable resistor VR divides a voltage V so as to set a reference voltage Vref, and the reference voltage Vref is supplied to an inverting input terminal of the comparator 420 via a resistor 423 (having a resistance of 100 Kilo-Ohm). The value of the reference voltage Vref varies due to a charging or a discharging of a capacitor 424 which grounds the inverting input terminal of the comparator 420. The inverting input terminal of the comparator 420 is connected to the non-inverting input terminal thereof via a resistor 422 and a diode D3 in forward direction, and such inverting input terminal is also connected to the input terminal 411 via a diode D2 in forward direction and via a resistor 421 (having a resistance of 10 Kilo-Ohm).

Next, the output signal of the comparator 412 is supplied to a clock input terminal of a delay flip-flop DFF1, the data input terminal D of which is supplied with a "1" signal. The output signal of the delay flip-flop DFF1 is supplied to a CPU 450 as an interrupt signal INT. The CPU 450 supplies a reset signal RS to the delay flip-flop DFF1.

The output signal of the comparator 412 turns on or off a switching element 431. When the switching element 431 is turned on, a capacitor 435 is charged via a first path comprising a resistor 432 and a switch 434 or via a second path comprising a constant current source 433 and the switch 434. In other words, the capacitor 435 is charged in a period when the output signal of the comparator 412 is identical to the "1" signal, and such period is converted into a charging voltage of the capacitor 435. In this case, a desirable charging characteristic of the capacitor 435 can be selected by selecting the switch 434. The charging voltage of the capacitor 435 is converted into a digital signal in an analog-to-digital (A/D) converter 442.

Next, a resistor 436 and a transistor 437 constitute a discharging path (or a reset path) of the capacitor 435. A base of transistor 437 is grounded via resistors 438 and 439, and the base of transistor 437 is also connected to the output terminal of the comparator 412 via the resistor 438 and a capacitor 440. Hence, when a base current is supplied to the base of transistor 437 via the capacitor 440 and the resistor 438 at a leading edge timing of the output signal of the comparator 412, the transistor 437 is turned on. Thus, a time-to-voltage (T/V) converter 430 is constituted as described heretofore.

The output signal of the comparator 412 is supplied to a negative input terminal of an AND gate AN1, and the output signal of the comparator 420 is supplied to a positive input terminal of the AND gate AN1. The output signal of such AND gate AN1 is supplied to a T/V converter 445 which has the same circuit constitution of the T/V converter 430. This T/V converter 445 converts a period when the AND gate AN1 outputs the "1" signal into a voltage. The output signal of the T/V converter 445 is converted into a digital signal in an A/D converter 446.

As described heretofore, the acceleration peak detecting circuit 410 is constituted.

Next, description will be given with respect to a musical tone processing circuit 460. This musical tone processing circuit 460 controls an operation for generating several kinds of musical tones based on output signals of A/D converters 427, 442 and 446. More specifically, the musical tone processing circuit 460 is constituted by registers 451, 452 and 453 for storing respective output data of the A/D converters 446, 442 and 427, the CPU 450 for controlling several portions within the circuit 460, a memory 455 for storing programs used in the CPU 450, registers 456 for once storing several kinds of data, switches 454 (including the select switch SEL shown in Fig. 17) for designating several kinds of commands and modes, and a tone generator 457 for generating a musical tone signal. The musical tone signal generated in the tone generator 457 is supplied to a sound system SS (not shown) wherein a musical tone corresponding to the supplied musical tone signal is generated.

## (2) OPERATION OF THE EMBODIMENT

Next, description will be given with respect to the operation of the first embodiment. Hereinafter, the switches 408 and 434 are connected as shown in Fig. 16.

(a) OPERATIONS OF COMPARATORS 412 AND 420

First, description will be given with respect to the operations of the comparators 412 and 420.

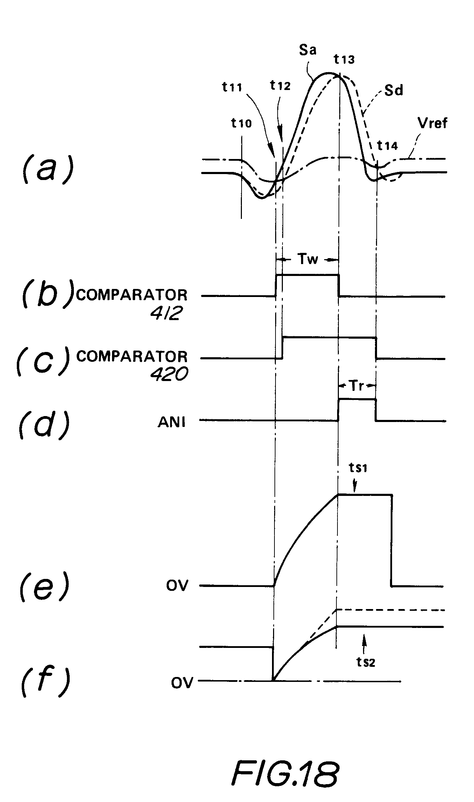

When the player holds the drum stick 402 (shown in Fig. 17) and swings the drum stick 402 once in a predetermined direction, the acceleration sensor 1X detects an acceleration of the drum stick 402 corresponding to the swing movement of the player, so that the acceleration sensor 1X outputs the acceleration signal to the input terminal 411 of the acceleration peak detecting circuit 410 as the acceleration signal Sa having a curve shown in Fig. 18(a). In general, the swing movement of the player may have an acceleration characteristic where an acceleration is once given to the drum stick 402 in an inverting direction of the desirable swing direction (in a pre-movement period) and the acceleration is thereafter increased in the desirable swing direction. Thereafter, the value of the acceleration reaches to a peak value, and then the value of the acceleration attenuates so as to reach a "0" value.

In this case, the pre-movement period is started at a time $t_{10}$ (shown in Fig. 18(a)), and the swing movement in the desirable swing direction will be started at a time $t_{11}$. The value of the acceleration signal Sa is smaller than that of the reference voltage Vref (as shown by a dashed line in Fig. 18(a)) in a period between the times $t_{10}$ and $t_{11}$. In addition, a value of an output signal Sd (as shown by a dotted line in Fig. 18(a)) of the integration circuit constituted by the resistor 415 and the capacitor 416 is smaller than that of the reference voltage Vref. As a result, the diode D1 (shown in Fig. 16) is turned off, and the diodes D2 and D3 are turned on. Hence, the reference voltage Vref is supplied to the inverting input terminal of the comparator 412 via the resistor 422 and the diode D3 in series, while the capacitor 424 starts to discharge its electric charge via the diode D2. Thus, the value of the reference voltage Vref is lowered so that the value of the reference voltage Vref becomes equal to that of the acceleration signal Sa at the time $t_{11}$. Since a value of a forward voltage drop of the diode D3 is quite small, it can be considered that the reference voltage Vref is directly supplied to the inverting input terminal of the comparator 412. Therefore, the voltage supplied to the inverting input terminal of the comparator 412 is higher than the voltage supplied to the non-inverting input terminal thereof until the time $t_{11}$, whereby the output signal of the comparator 412 becomes identical to the "0" signal as shown in Fig. 18(b).

Next, a relation between the values of the acceleration signal Sa and the reference voltage Vref can be expressed as the following inequality (3) during a period between the times $t_{11}$ and $t_{12}$.

$$Sa > Vref > Sd \quad (3)$$

As a result, the diodes D1 and D2 are turned off, and the diode D3 is turned on, whereby the comparator 412 performs a comparing operation for comparing the level of the acceleration signal Sa with that of the reference voltage Vref. Due to this comparing operation, the output signal of the comparator 412 turns up to the "1" signal at the time $t_{11}$ as shown in Fig. 18(b). In addition, since the diode D2 is turned off at the time $t_{11}$, the discharge path of the capacitor 424 is cut off. Hence, the capacitor 424 is charged via the variable resistor VR and the resistor 423. Thus, the value of the reference voltage Vref increases gradually after the time $t_{11}$, and thereafter, the level of the reference voltage Vref reaches at a predetermined initial voltage.

Next, the level of the signal Sd exceeds that of the reference voltage Vref at a time $t_{12}$. As a result, the diode D1 is turned on and the diode D3 is turned off, hence, the comparator 412 performs the comparing operation thereof. Comparing to the signal Sa, the phase of the signal Sd is delayed by a minute time and the inclination of the curve of the signal Sd is slightly small. Therefore, a relation such as Sa > Sd is maintained until the value of the acceleration signal Sa reaches at the peak value, whereby the output level of the comparator 412 is maintained at the "1" level after the time $t_{12}$. Thereafter, at the time $t_{12}$ when the level of the signal Sd exceeds that of the reference voltage Vref, the output signal of the comparator 420 rises up to the "1" signal as shown in Fig. 18(c).

Next, the level of the signal Sd exceeds that of the acceleration signal Sa at a time $t_{13}$, whereby the output signal of the comparator 412 falls down to the "0" signal as shown in Fig. 18(b). After the time $t_{13}$, the level of the acceleration signal Sa does not exceed that of the signal Sd and that of the reference voltage Vref. As a result, the output level of the comparator 412 is maintained at the "0" level.

During a period between times $t_{13}$ and $t_{14}$, the level of the signal Sd is higher than that of the reference voltage Vref, whereby the output level of the comparator 420 is maintained at the "1" level. At the time $t_{14}$, the level of the reference voltage Vref exceeds that of the signal Sd, whereby the output signal of the comparator 420 falls down to the "0" signal. Since the level of the signal Sd is maintained lower than that of the reference voltage Vref after the time $t_{14}$, the output level of the comparator 420 is maintained at the "0" level.

The above-mentioned output signal of the comparator 420 is supplied to the positive input terminal of the AND gate AN1, while the output signal of the comparator 412 is inverted at the negative input terminal of the AND gate AN1. As a result, the output level of the AND gate AN1 becomes the "1" level during a period between the times $t_{13}$ and $t_{14}$ as shown in Fig. 18(d).

(b) MEANINGS OF OUTPUT SIGNALS OF COMPARATOR 412 AND AND GATE AN1

Next, description will be given with respect to the period when the comparator 412 outputs the "1" signal.

The output level of the comparator 412 becomes the "1" level at the period between the times $t_{11}$ and $t_{13}$ as shown in Fig. 18(a). It is apparent from Fig. 18 that the time $t_{11}$ can be identified as a time when the level of the acceleration signal Sa is inverted from the negative level to the positive level.

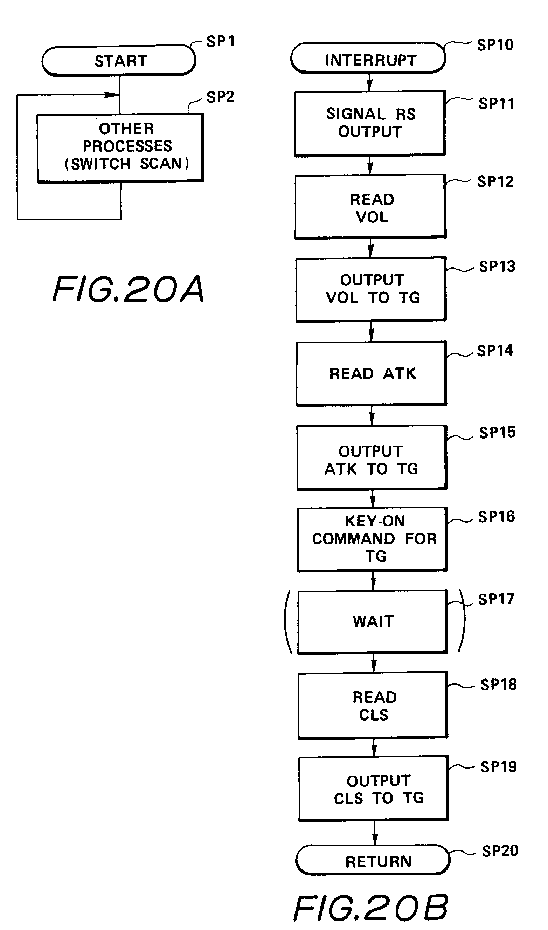

Next, description will be given with respect to a detection principle for detecting such inverting time $t_{11}$. When such inverting time is detected by use of a fixed reference level $L_1$ as shown in Fig. 19, a time ta will be detected as the inverting time. However, this time ta must be later than the real inverting time. On the other hand, in the case where a reference level $L_2$ (corresponding to the reference voltage Vref) varies in response to the level variation of the acceleration signal Sa in a negative side as described in the present embodiment, the detected inverting time will be identical to a time tb, whereby a detection accuracy must be raised reasonably.

In addition, the time $t_{13}$ is approximately identical to a peak time when the value of the acceleration signal Sa reaches at the peak value. According to the detecting principle as shown in Fig. 18(a), the level of the acceleration signal Sa (as an original signal) is compared with that of the delayed acceleration signal Sd, and a time when the level of the signal Sd exceeds that of the acceleration signal Sa is judged as the above peak time. Therefore, such detecting principle can detects the peak time with accuracy by properly selecting the delay time of the signal Sd.

As is apparent from the above description, a period between the times $t_{11}$ and $t_{13}$ shown in Fig. 18 (i.e., a period Tw when the comparator 412 outputs the "1" signal) corresponds to a period when the acceleration is increasing.

Meanwhile, a time $t_{14}$ when the output signal of the comparator 420 falls down is identical to a time when the level of the delay signal Sd becomes lower than that of the reference voltage Vref. As a result, a period Tr when the AND gate AN1 outputs the "1" signal corresponds to a period when the acceleration of the drum stick 402 is attenuating in the desirable swing direction.

(c) OPERATIONS OF OUTPUT SIGNALS OF COMPARATOR 412 AND AND GATE AN1

As described above, the high level period of the output signal of the comparator 412 means the acceleration increasing period. Such output signal of the comparator 412 is supplied to a terminal G of the switching element 425 and the T/V converter 430.

As a result, the switching element 425 is subject to an open state in the acceleration increasing period, whereby the acceleration signal Sa is supplied to the capacitor 426 in the period Tw. Thus, a terminal voltage of the capacitor 426 will be increasing in the period Tw as shown in Fig. 18(e). Thereafter, the switching element 425 is turned off at the time $t_{13}$ (i.e., the peak time of the signal Sa). As a result, a peak voltage of the signal Sa is held in the capacitor 426. At a predetermined timing $T_{s1}$ slightly delayed from the time $t_{13}$, the holding voltage of the capacitor 426 is sampled in the A/D converter 427 wherein the holding voltage is converted into a digital signal.

Meanwhile, the base current is flown into the base of transistor 437 via a differentiation circuit comprising the capacitor 440 and the resistor 438 at the time $t_{11}$ when the output signal of the comparator 412 supplied to the T/V converter 430 rises up to the "1" signal. Hence, the electric charge of the capacitor 435 is discharged via the resistor 436 and the transistor 437. In other words, the terminal voltage of the capacitor 435 is reset to zero-volt (0V) as shown in Fig. 18(f) at the time $t_{11}$. In addition, the switching element 431 is turned on at the leading edge timing $t_{11}$ of the output signal of the comparator 412, whereby the capacitor 435 is charged via the resistor 432. Therefore, the terminal voltage of the capacitor 435 will be increasing in accordance with a predetermined charging characteristic (shown by a full line in Fig. 18(f)) from the reset time $t_{11}$. On the other hand, when the switch 434 is connected to the constant current source 433, the terminal voltage of the capacitor 435 will be increasing in accordance with a predetermined charging characteristic shown by a dotted line in Fig. 18(f).

On the contrary, when the output signal of the comparator 412 falls down to the "0" signal, the switching element 431 is turned off so that the charging of the capacitor 435 is stopped. At this time, the transistor 437 has been already turned off so that the terminal voltage of the capacitor 435 will be held after the time $t_{13}$. The value of the holding voltage of the capacitor 435 must be determined based on a charging period of the capacitor 435, hence, such holding voltage corresponds to the period Tw shown in Fig. 18. As shown in Fig. 18(f), such holding voltage is sampled and converted into a digital signal in the A/D converter 442 at a timing $t_{s2}$ which is slightly delayed after the time $t_{13}$.

Next, the AND gate AN1 outputs the output signal having the high level period Tr (i.e., the attenuating period Tr of the acceleration signal Sa) to the T/V converter 445 wherein a voltage corresponding to the period Tr is generated in a manner similar to that of the T/V converter 430. The output voltage of the T/V converter 445 is converted into a digital signal in the A/D converter 446 at a predetermined timing.

(d) OPERATION OF MUSICAL TONE PROCESSING CIRCUIT 460

Next, description will be given with respect to the operation of the musical tone processing circuit 460.

The CPU 450 controls the musical tone processing circuit 460 in accordance with the flowcharts shown in Figs. 20A and 20B which are performed based on the programs stored in the memory 455.

First, the CPU 450 starts the operation thereof at a step SP1 and then performs processes other than the process for generating musical tones at a step SP2 as shown in Fig. 20A. According to the processes in the step SP2, the CPU 450 scans the respective switches in the switches 454 so as to detect whether the tone color is changed or not, and the CPU 450 changes the tone color of the tone generator 457 so as to generate a musical tone having a selected tone color, for example. In this case, the CPU 450 repeatedly performs the processes in the step SP2 until the D flip-flop DFF1 (shown in Fig. 16) outputs the interrupt signal INT.

When the CPU 450 receives the interrupt signal INT from the D flip-flop DFF1, the CPU 450 executes the processes in steps SP10 etc. shown in Fig. 20B. First, the CPU 450 outputs the reset signal RS so as to reset the D flip-flop DFF1 in a step SP11. This reset signal RS stops the D flip-flop DFF1 outputting the interrupt signal INT. In a next step SP12, the CPU 450 reads the data stored in the register 453 as volume data VOL. In the present embodiment, the A/D converters 427, 442 and 446 output respective digital signals corresponding to the peak value of the acceleration signal Sa, the increasing period Tw and the attenuating period Tr to the registers 453, 452 and 451, and these digital signals are used as the musical tone control data. More specifically, the data stored in the register 453 are used as the volume data VOL for controlling the tone volume, the data stored in the register 452 are used as attack data ATK for designating a rising timing when the musical tone is started to be generated, and the data stored in the register 451 are used as close (or decay) data CLS for designating an attenuating period of the musical tone.

When the CPU 450 reads the volume data VOL in the step SP12, the CPU 450 supplies such volume data VOL to the tone generator 457 so as to set the tone volume value of the musical tone signal in a step SP13. Next, the CPU 450 reads the attack data ATK from the register 452 and supplies such attack data ATK to the tone generator 457 so as to set the rising timing of the musical tone signal in steps SP14 and SP15. Thereafter, the CPU 450 supplies a key-on command to the tone generator 457 in a step SP16. As a result, the tone generator 457 starts to generate the musical tone based on the attack data ATK and the volume data VOL. After a desirable wait time has been passed in a step SP17, the CPU 450 reads the close data CLS from the register 451 in a step SP18. In a next step SP19, such close data CLS are supplied to the tone generator 457 wherein the level of the musical tone signal is attenuated so that the musical tone signal has an attenuating envelope the value of which corresponds to that of the attenuating period designated by the close data CLS. At this time, a first process for generating the musical tone is completed. After the step SP19, the operation of the CPU 450 returns to a main routine (i.e., the step SP2) of the interrupt process via a step SP20. Thereafter, such interrupt process (i.e., the process for generating the musical tone) will be repeatedly performed at every time when the D flip-flop DFF1 outputs the interrupt signal INT.

Incidentally, the wait time in the step SP17 can be omitted in response to the kinds of the musical tones to be generated, if necessary.

(3) EFFECTS

The first embodiment of the musical tone control apparatus can obtain the following specific effects.

In order to detect the characteristics (i.e., the increasing period, the attenuating period, the peak value and the like) of the varying input signal such as the acceleration signal Sa, the conventional apparatus employs a first method for comparing the level of the input signal with a predetermined level, or the conventional apparatus employs a second method for converting the input signal into the digital signal and detecting the above periods and the peak value by use of a software process.

Since a dynamic range is relatively small, it is difficult that the above first method extracts (or detects) a slow movement and a rapid movement of a human body as well. In the above second method, it is difficult to detect a rapid variation of the input signal with accuracy because of an executing speed of the CPU. More specifically, a large quantity of information must be required for detecting the characteristics of the input signal, hence, the general CPU can not follow up the rapid variation of the input signal. In addition, in the case where the apparatus is constituted so that the characteristics of the acceleration are detected in the X-axis direction, the Y-axis direction and the Z-axis direction, the CPU in each direction must be required in order to raise the processing speed and the processing accuracy. Thus, the conventional apparatus suffers problems in that the constitution thereof must be complicated and the cost thereof must be raised.

On the contrary, the peak time of the input signal (the acceleration signal Sa) is detected by comparing the level of the input signal with that of the delayed input signal in the first embodiment. Hence, the first embodiment can detect the peak time and the peak value of the input signal based on a real time and with accuracy without using the CPU. In addition, the first embodiment can detect the acceleration increasing period and the acceleration attenuating period with accuracy because the level of the reference voltage Vref varies in response to that of the input signal.

## (4) MODIFIED EMBODIMENTS OF THE EMBODIMENT

Next, description will be given with respect to modified embodiments of the first embodiment.

### (a) FIRST MODIFIED EMBODIMENT

The digital signals respectively outputted from the A/D converters 427, 442 and 446 can be used for controlling other parameters of the musical tone such as the tone pitch, the tone color, the regist, the performance speed (or the tempo) of an automatic rhythm performance apparatus and the like.

### (b) SECOND MODIFIED EMBODIMENT

It is possible to constitute the first embodiment such that a musical tone generation due to the acceleration sensor 1X corresponds to a snare drum tone and a high hat open tone, and a musical tone generation due to the acceleration sensor 1Y corresponds to a bass drum tone and a high hat close tone. Accordingly, it is possible to generate a rhythm tone by swinging the drum stick 402 in horizontal and vertical directions. Thus, it is possible to generate two kinds of rhythm tones in a short time by rapidly changing the swing direction of the drum stick 402 from the horizontal direction to the vertical direction, for example.

### (c) THIRD MODIFIED EMBODIMENT

According to a third modified embodiment, a various musical tone control can be done by use of the musical tone control apparatus combined with the angle sensor for detecting angles of the player's arm and the like.

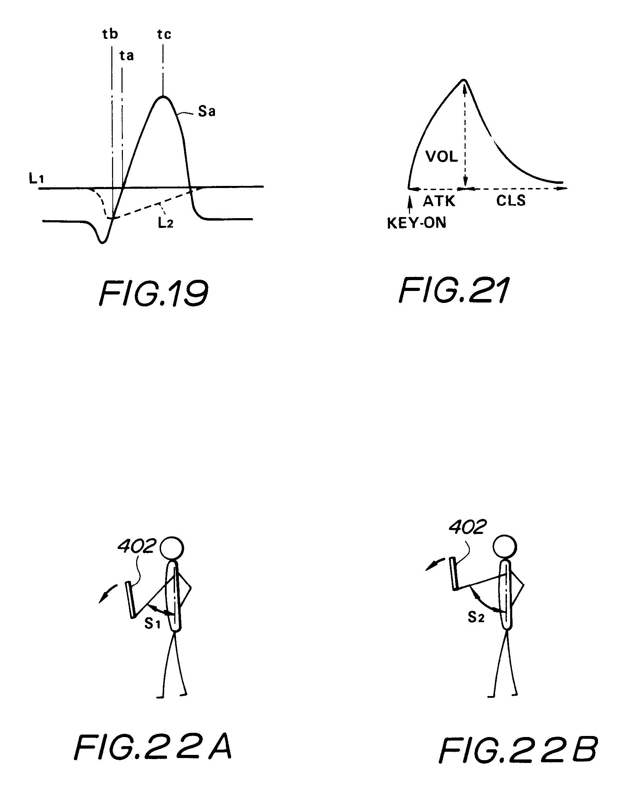

For example, the angle of the player's arm controls the key code for designating the tone pitch, and the swing movement of the drum stick 402 controls the key-on timing (i.e., the start timing for generating the musical tone) and the envelope of the musical tone in an attack portion, a peak portion and a decay portion. Fig. 22A shows the player who swings the drum stick 402 downward by an arm angle of $S_1$, and Fig. 22B shows the player who swings the drum stick 402 downward by an arm angle of $S_2$. Thus, the player can generate the musical tone having a desirable tone pitch and a desirable tone volume envelope which corresponds to his arm angle and the swing direction of the drum stick 402. Therefore, it is possible to realize a brand-new performance operation and a brand-new performance effect which could not been obtained by the conventional apparatus.

Next, description will be given with respect to the angle sensor for detecting the arm angle.

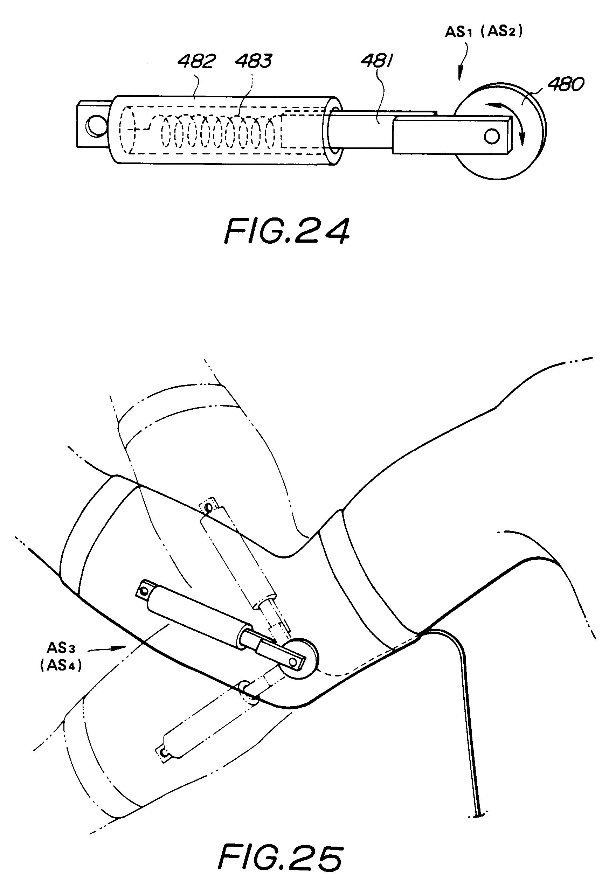

Fig. 23 shows an example of the angle sensor which is mounted at a predetermined position of a specific wear. In Fig. 23, $AS_1$ and $AS_2$ designate angle sensors for detecting angles between the arm and the body of the player. As shown in Fig. 24, each of the angle sensors $AS_1$ and $AS_2$ is constituted by a rotary type potentiometer 480, an actuator 481 interlocked with a moving terminal of the potentiometer, a receiving member 482 for receiving the actuator 481 which can be slid freely and a spring 483 for pressing the actuator 481 against the receiving member 482. When a relatively revolving movement is existed between the receiving member 482 and the potentiometer 480, the actuator 481 must revolve by a revolving number corresponding to the revolving movement with respect to the potentiometer 480. Thus, the angle signal can be obtained from the potentiometer 480.

In Fig. 23, the potentiometer 480 is fixed at the shoulder of the player, and the receiving member 482 is fixed at an upper arm portion. Hence, the potentiometer 480 outputs an angle signal corresponding to the arm angle in the right and left directions of the player's body. As shown in Fig. 22, it is possible to detect the arm movement in the forward and backward directions of the player's body by changing the mounted positions of the angle sensors $AS_1$ and $AS_2$.

In addition, as shown in Fig. 23, angle sensors $AS_3$ and $AS_4$ are further provided so that the key code can be determined based on the combination of the output signals of the angle sensors $AS_1$ to $AS_4$. In this case, it is possible to select the key code in a wide tone range, and it is also possible to rapidly vary the key code. Thus, a brandnew performance effects can be obtained. As an example, Fig. 25 shows a movement of the angle sensor $AS_3$ (or $AS_4$) mounted at the player's elbow.

Incidentally, 490 shown in Fig. 23 designates a case which provides the circuit shown in Fig. 16 and the sound system therein. When such case is mounted to the player as shown in Fig. 23, it becomes functional to operate such case. In this case, the tone generator, the sound system and the like can be provided to the case externally.

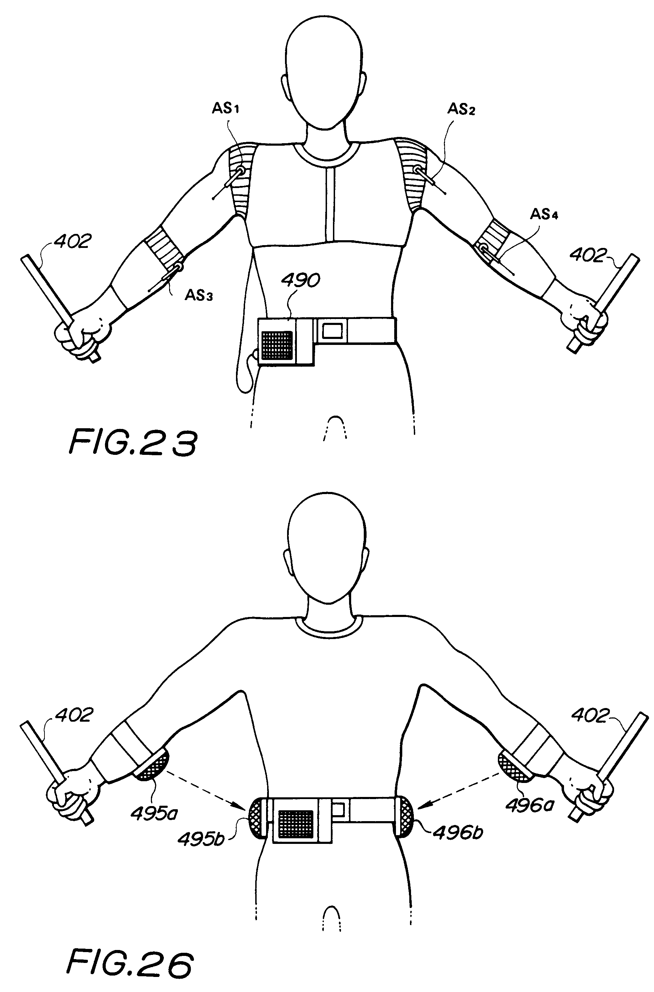

As another example of the angle sensor, it is possible to use ultrasonic transmitters 495a and 496a and ultrasonic receivers 495b and 496b as shown in Fig. 26. In this case, the arm angle can be detected based on the transmitting time of the ultrasonic waves which are transmitted between the ultrasonic transmitters 495a and 496a and the ultrasonic receivers 495b and 496b.

(d) FOURTH MODIFIED EMBODIMENT

In the first embodiment shown in Fig. 16, the acceleration sensors 1X, 1Y and 1Z are provided within the drum stick 402. Instead, acceleration sensors can be mounted directly or indirectly at several portions of the player's body such as hands, feet, a neck, arms and the like. In this case, the accelerations at the above portions of the player's body will be detected.

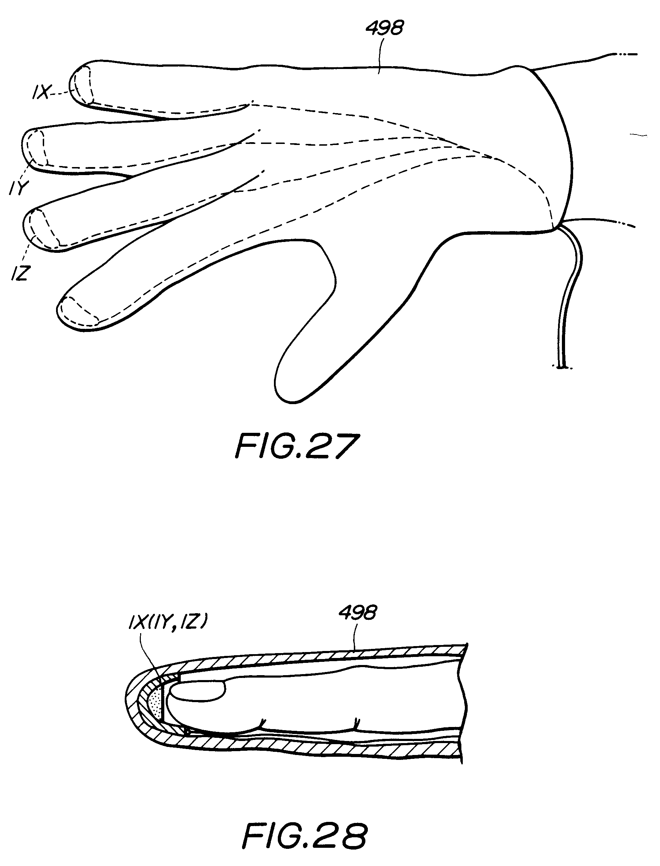

Fig. 27 shows an example of such acceleration sensor which is mounted at the glove for the player's hand. As shown in Figs. 27 and 28, the acceleration sensors 1X, 1Y and 1Z and the like are mounted at respective finger tip portions of a glove 498. Due to such constitution, it is possible to detect several accelerations in response to the swing movement of the player's hand etc. Hence, the player can perform several kinds of performances by his daily movement without using the musical instruments such as the drum stick 402.

**Claims**

1. A musical tone control apparatus comprising:
   a) detecting means (11; 402) including an acceleration sensor mountable on or holdable by a part of a player for detecting the degree of acceleration which is generated in response to a movement of said part;
   b) musical tone control means (39; 450) coupled to the detecting means (11) for generating musical tone control data in response to the detected degree of the acceleration; and
   c) musical tone generating means (41; 460) coupled to the musical tone control means (39) for generating a musical tone signal, characterized by
   d) the musical tone control means being provided with start signal generating means for generating a start signal (INT in Fig. 16, Vi in Fig. 1) *which triggers the generation of each musical tone at each time* when the detected degree *of acceleration* or its time integral value has exceeded a predetermined value (Vref in Fig. 16, Vr1 in Fig. 1) and *with means (36, 37, 38; 425, 427, 453, 430, 442, 452) for generating control data for controlling the characteristic of said musical tone based on the movement of said part*, and
   e) the musical tone generating means *including means* to generate the musical tone signal corresponding to the movement of the part based on the musical tone control data at each time the start signal is generated to trigger the musical tone generation.

2. A musical tone control apparatus according to claim 1 wherein the detecting means detects a degree of an acceleration generated in response to a swing movement of an object.

3. A musical tone control apparatus according to claim 1 wherein said detecting means has a stick shape (402).

4. A musical tone control apparatus according to claim 2 wherein said musical tone control data represent a start signal (INT) indicating a start timing for generating a musical tone.

5. A musical tone control apparatus according to claim 1 wherein said musical tone control data includes data indicating a tone volume and/or a tone color.

6. A musical tone control apparatus according to claim 1 or 2 further including sensor means (Figs. 26 to 29) for detecting
   a movement parameter other than that of said detecting means, a tone pitch or a tone color of said musical tone signal being controlled based on a detecting result of said sensor means, and an envelope of said musical tone being controlled based on the detecting result of said detecting means.

7. A musical tone control apparatus according to claim 1 or 2, further comprising:
   (f) first detecting means (15) for outputting a first detection signal when an output level of said acceleration sensor means becomes higher than a predetermined first level;
   (g) second detecting means (25, 29) for outputting a second detection signal when a level of a higher harmonic component included in the output signal of said acceleration sensor means becomes higher than a predetermined second level:

(h) hold means (36, 37) for holding said higher harmonic component level when both of said first and second detection signals are outputted respectively from said first and second detecting means; and

(i) first means (41) for generating first musical tone control data which control a musical tone signal based on a detecting result of said first detecting means.

8. A musical tone control apparatus according to claim 7 further comprising changing means (39) for changing or suppressing said first musical tone control data based on impulse data representative of a detected intensity of impulse corresponding to an output level of said hold means.

9. A musical tone control apparatus according to claim 7 further comprising control means (39) for controlling said first musical tone control data based on impulse data representative of a detected intensity of impulse corresponding to an output level of said hold means.

10. A musical tone control apparatus according to claim 7 further comprising second means (39) for generating second musical tone control data ($D_p$) other than said first musical tone control data based on impulse data representative of a detected intensity of impulse corresponding to an output level of said hold means.

11. A musical tone control apparatus according to claim 10 wherein said second musical tone control data ($D_p$) represent a tone volume, a tone color or a tone pitch of a musical tone.

12. A musical tone control apparatus according to claim 1 or 2, further comprising:

(f) first detecting means (14, 15, 18, 19, 20) for outputting a first detecting signal the level of which becomes a predetermined level while an output level of said acceleration sensor means becomes higher than a level of a first reference signal;

(g) amplifier means (25, 27) for amplifying a higher harmonic component included within the output signal of said acceleration sensor;

(h) second detecting means (29, 31, 33, 34) for outputting a second detection signal the level of which becomes a predetermined level while the output level of said amplifier means becomes higher than a level of a second reference signal;

(i) interrupt signal generating means (22, 23) for generating an interrupt signal representing that both levels of said first and second detection signals become identical to said predetermined level:

(j) hold means (36, 37) for holding a peak value of said higher harmonic component in response to a timing of said second detection signal;

(k) analog-to-digital converter means (38) for converting said peak value of said higher harmonic component into digital data representing said intensity of impulse; and

(l) central processing means (39) for converting said digital data into tone pitch data representing a tone pitch of a musical tone in response to the timing of said interrupt signal.

13. A musical tone control apparatus according to claim 12 wherein said acceleration sensor means (11) has a vibrator which is made from an inorganic material such as a piezoplastic having a piezoelectric characteristic.

14. A musical tone control apparatus according to claim 13 wherein said first detecting means comprises:

(a) first low-pass filter means (14) for extracting a first signal from said output signal of said acceleration sensor means, said first low-pass filter means having a first time constant;

(b) second low-pass filter means (18) for extracting a second signal from the output signal of said acceleration sensor means, said second low-pass filter means having a second time constant which is larger than said first time constant;

(c) means (19, 20) for generating said first reference signal based on a predetermined first reference voltage and said second signal; and

(d) comparator means (15) for comparing the level of said first signal and that of said first reference signal so as to output said first detection signal the level of which becomes said predetermined level while the level of said first signal becomes higher than that of said first reference signal.

15. A musical tone control apparatus according to claim 14 wherein said second time constant is set approximately ten times of said first time constant.

16. A musical tone control apparatus according to claim 12, 14 or 15 wherein said amplifier means comprises:

(a) high-pass filter means (27) for extracting said higher harmonic component from the output signal of said acceleration sensor means; and

(b) an amplifier (25) for amplifying said higher harmonic component.

17. A musical tone control apparatus according to claim 16 wherein said second detecting means comprises:

(a) third low-pass filter means (33) for extracting a third signal from the output signal of said acceleration sensor means (11);

(b) means (31, 34) for generating said second reference signal based on a predetermined second reference voltage and said third signal; and

(c) comparator means (29) for comparing the level of said second reference signal and that of the output level of said amplifier means so as to output said second detection signal the level of which becomes said predetermined level while the output level of said amplifier means becomes higher than that of said second reference signal.

18. A musical tone control apparatus according to claim 17 wherein said interrupt signal generating means comprises:

(a) flip-flop means (23) for storing said first detection signal in response to a timing of said second detection signal, said flip-flop means being reset by said central processing means (39) when both levels of said first and second detection signals become identical to a level other than said predetermined level; and

(b) AND gate means (22) for generating said interrupt signal by use of said first detection signal and the output signal of said flip-flop means based on an AND operation.

19. A musical tone control apparatus according to claim 12 wherein said hold means comprises:

(a) analog switch means (36) for passing through the output signal of said amplifier means at every time when the level of said second detection signal becomes identical to said predetermined level, said analog switch means being turned off while the level of said second detection signal becomes identical to a level other than said predetermined level; and

(b) capacitor means (37) for holding the output level of said analog switch means.

20. A musical tone control apparatus according to claim 1 or 2 wherein the object is a predetermined part of a human body and, so as to generate a musical tone signal based on an intensity of impulse generated at a time when the predetermined part collides with another object, the apparatus further comprises:

(b) first detecting means (14, 15, 18, 19, 20) for outputting a first detection signal the level of which becomes a predetermined level while an output level of said acceleration sensor means becomes higher than a level of a first reference signal;

(c) amplifier means (25, 27) for amplifying a higher harmonic component included within the output signal of said acceleration sensor;

(d) second detecting means (29, 31, 33, 34) for outputting a second detection signal the level of which becomes a predetermined level while the output level of said amplifier means becomes higher than a level of a second reference signal;

(e) interrupt signal generating means (22, 23) for generating an interrupt signal representing that both levels of said first and second detection signals become indentical to said predetermined level;

(f) hold means (36, 37) for holding a peak value of said higher harmonic component in response to a timing of said second detection signal;

(g) analog-to-digital converter means (38) for converting said peak value of said higher harmonic component into digital data representing said intensity of impulse;

(h) central processing means (39) for converting said digital data into tone pitch data representing a tone pitch of a musical tone in response to the timing of said interrupt signal; and

(i) musical tone generating means (41, 43) for generating a musical tone based on said tone pitch data.

21. A musical tone control apparatus comprising:

(a) detecting means (Sa) for detecting the degree of accerlation which is generated in response to a movement of an object;

(b) musical tone control means (126 - 131) coupled to the detecting means (Sa) for generating musical tone control data in response to the detected degree of the acceleration; and

(c) musical tone generating means (132) coupled to the musical tone control means (126 - 131) for generating a musical tone signal in response to the musical tone control data, characterized by

(a) a first integration circuit (102) for integrating an acceleration signal (AI) outputted from said acceleration detector (Sa) so as to convert said acceleration signal into a speed signal representing a speed of movement of said object;

(b) a second integration circuit (108) for integrating said speed signal so as to convert said speed signal into a distance signal representing a distance of movement of said object;

(c) control means (CTL) for controlling integration actions of said first and second integration circuits (102, 108) based on a level of said acceleration signal in a period when said acceleration of said object is increasing, and for outputting an interrupt signal when said acceleration increasing period is ended;

said musical tone control means (126-131) including means (126 - 129, 131) converting, storing and outputting said speed and distance signals to said musical tone generating means (132) as control data for controlling the characteristics of a musical tone to be generated thereby.

22. A musical tone control apparatus according to claim 21 wherein said first integration circuit (102) comprises a first operational amplifier (103), a first resistor (104) and a first capacitor (105) and said second integration circuit (108) comprises a second operational amplifier (109), a second resistor (111) and a second capacitor (112), said acceleration signal being inputted into an inverting input terminal of said first operational amplifier via said first resistor, said first capacitor being connected between said inverting input terminal and an output terminal of said first operational amplifier whose non-inverting input terminal is grounded, said speed signal outputted form said output terminal of said first operational amplifier being inputted into an inverting input terminal of said second operational amplifier via said second resistor, said second capacitor being connected between said inverting input terminal and an output terminal of said second operational amplifier whose non-inverting input terminal is grounded, and said distance signal being outputted from said output terminal of said second operational amplifier.

23. A musical tone control apparatus according to claim 21 further comprising:

(f) second integration means (108) for integrating the speed signal so as to convert the speed signal into distance signal representing a moving distance of the object;

(g) control means (106, 113, 116, 122) for controlling integration actions of the first and second integration means based on a level of the detected degree of the acceleration in a predetermined period; and

(h) the musical tone generation means (132) generating a musical tone signal in accordance with said distance signal.

24. A musical tone control apparatus according to claim 23 wherein said predetermined period is identical to a period when said acceleration of said object is increasing.

25. A musical tone control apparatus according to claim 21 or 23 wherein said control means includes:

(a) means (116) for outputting a pulse signal the pulse width of which corresponds to a period when said acceleration of said object is increasing;

(b) delay means (122) for delaying a trailing edge timing of said pulse signal so as to enlarge said pulse width of said pulse signal by a predetermined time; and

(c) integration action control means (106, 113) for controlling the integration action of said first and second integration circuits (102, 108), said first and second integration circuits performing the integration actions thereof during a pulse width period of an output signal of said delay means.

26. A musical tone control apparatus according to claim 25 wherein said integration action control means consists of first and second reed relays, said first capacitor (105) being connected between both contacts of said first reed relay (106), said second capacitor (112) being connected between both contacts of said second reed relay (113), the contacts of said first and second reed relays being opened in the pulse width period of the output signal of said delay means, the contacts of said first and second reed relays being closed in a period other than said pulse width period.

27. A musical tone control apparatus according to claim 25 wherein said integration action control means (116) comprises

(a) an integration circuit (119, 120) for delaying said acceleration signal; and

(b) a comparator (117) for comparing the level of said acceleration signal and that of a delayed acceleration signal outputted from said integration circuit so as to output said pulse signal the pulse width of which represents a period when the level of said acceleration signal is larger than that of said delayed acceleration signal.

28. A musical tone control apparatus according to claim 24 wherein the control means (CTL) controls the integration actions of the first and second integration means based on a level of the detected degree of the acceleration during an acceleration increasing period when the acceleration of the object is increasing.

**Patentansprüche**

1. Musiktonsteuerungsvorrichtung, die folgendes aufweist:

   (a) Nachweismittel (11; 402), die einen Beschleunigungssensor enthalten, der an einem Körperteil eines Spielers befestigt ist oder von diesem gehalten wird, zum Feststellen des Grades der Beschleunigung, die im Ansprechen auf eine Bewegung des besagten Teiles erzeugt wird;

   (b) Musiktonsteuermittel (39; 450), die mit den Nachweismitteln (11) verbunden sind, um Musiktonsteuerdaten im Ansprechen auf den festgestellten Grad der Beschleunigung zu erzeugen; und

   (c) Musiktonerzeugungsmittel (41; 460), die mit den Musiktonsteuermitteln (39) zur Erzeugung eines Musiktonsignales verbunden sind, gekennzeichnet dadurch, daß

   (d) die Musiktonsteuermittel mit Startsignalerzeugungsungsmitteln zur Erzeugung eines Startsignals (INT in Fig. 16, Vi in Fig. 1), welches die Erzeugung jeden Musiktones jedesmal auslöst, wenn der festgestellte Grad der Beschleunigung oder sein Zeitintegralwert einen vorgegebenen Wert (Vref in Fig. 16, Vr1 in Fig. 1) überschritten hat, und mit Mitteln (36, 37, 38; 425, 427, 453, 430, 442, 452) zur Erzeugung von Steuerdaten zur Steuerung der Eigenschaften dieses Musiktones auf der Grundlage der Bewegung des besagten Teiles versehen sind, und

   (e) die Musiktonerzeugungsmittel Mittel enthalten, um das der Bewegung des Teiles entsprechende Musiktonsignal auf der Grundlage der Musiktonsteuerdaten zu erzeugen jedesmal, wenn das Startsignal erzeugt wird, um die Musiktonerzeugung auszulösen.

2. Musiktonsteuervorrichtung nach Anspruch 1, bei der die Nachweismittel einen im Ansprechen auf eine Schwingungsbewegung eines Teiles erzeugten Grad einer Beschleunigung feststellen.

3. Musiktonsteuervorrichtung nach Anspruch 1, bei der die Nachweismittel die Form eines Stabes (402) aufweisen.

4. Musiktonsteuervorrichtung nach Anspruch 2, bei der die Musiktonsteuerdaten ein eine Startzeitsteuerung anzeigendes Startsignal (INT) zur Musiktonerzeugung darstellen.

5. Musiktonsteuervorrichtung nach Anspruch 1, bei der die Musiktonsteuerdaten Daten enthalten, die eine Lautstärke und/oder eine Klangfarbe kennzeichnen.

6. Musiktonsteuervorrichtung nach Anspruch 1 oder 2 mit zusätzlichen Sensormitteln (Figuren 26 bis 29) zum Nachweis eines Bewegungsparameters, der anders ist als derjenige der Nachweismittel, wobei eine Tonhöhe oder Klangfarbe des Musiktonsignals auf der Grundlage eines Nachweisergebnisses der Sensormittel und eine Hüllkurve des Musiktones auf der Grundlage des Nachweisergebnisses der Nachweismittel gesteuert werden.

7. Musiktonsteuervorrichtung nach Anspruch 1 oder 2, die außerdem folgendes aufweist:

   (f) erste Nachweismittel (15), um ein erstes Nachweissignal auszugeben, wenn ein Ausgabepegel der Beschleunigungssensormittel höher wird als ein vorgegebener erster Pegel;

   (g) zweite Nachweismittel (25, 29), um ein zweites Nachweissignal auszugeben, wenn ein Pegel einer in dem Ausgabesignal dieser Beschleunigungssensormittel enthaltenen höheren harmonischen Teilschwingung höher wird als ein vorgegebener zweiter Pegel;

   (h) Haltemittel (36, 37), um diesen höheren harmonischen Teilschwingungspegel zu halten, wenn sowohl die ersten als auch die zweiten Nachweissignale jeweils von diesen ersten und zweiten Nachweismitteln ausgegeben werden; und

   (i) erste Mittel (41) zur Erzeugung erster Musiktonsteuerdaten, welche ein Musiktonsignal auf der Grundlage eines Nachweisergebnisses der ersten Nachweismittel steuern.

8. Musiktonsteuervorrichtung nach Anspruch 7, die außerdem Änderungsmittel (39) aufweist zur Änderung oder Unterdrückung der ersten Musiktonsteuerdaten auf der Grundlage von Impulsdaten, die für eine einem Ausgabepegel dieser Haltemittel entsprechende nachgewiesene Impulsstärke repräsentativ sind.

9. Musiktonsteuervorichtung nach Anspruch 7, die außerdem Steuermittel (39) aufweist zur Steuerung der ersten Musiktonsteuerdaten auf der Grundlage von Impulsdaten, die für eine einem Ausgabepegel der Haltemittel entsprechende nachgewiesene Impulsstärke repräsentativ sind.

10. Musiktonsteuervorrichtung nach Anspruch 7, die zweite Mittel (39) aufweist zur Erzeugung zweiter Musiktonsteuerdaten ($D_p$), die sich von den ersten Musiktonsteuerdaten unterscheiden, auf der Grundlage von Impulsdaten, die für eine einem Ausgabepegel der Haltemittel entsprechende nachgewiesene Impulsstärke repräsentativ sind.

11. Musiktonsteuervorrichtung nach Anspruch 10, bei der die zweiten Musiktonsteuerdaten (D$_p$) eine Lautstärke, eine Klangfarbe oder eine Tonhöhe eines Musiktones repräsentieren.

12. Musiktonsteuervorrichtung nach Anspruch 1 oder 2, die außerdem folgendes aufweist:

(f) erste Nachweismittel (14, 15, 18, 19, 20), um ein erstes Nachweissignal mit einem vorgegebenen Pegel auszugeben, während ein Ausgabepegel der Beschleunigungssensormittel höher wird als ein Pegel eines ersten Vergleichssignals;

(g) Verstärkermittel (25, 27), um eine in dem Ausgabesignal des Beschleunigungssensors enthaltene höhere harmonische Teilschwingung zu verstärken;

(h) zweite Nachweismittel (29, 31,33, 34), um ein zweites Nachweissignal mit einem vorgegebenen Pegel auszugeben, während der Ausgabepegel der Verstärkermittel höher wird als ein Pegel eines zweiten Vergleichssignals;

(i) Unterbrechungssignalerzeugungsmittel (22, 23), um ein Unterbrechungssignal zu erzeugen, das anzeigt, daß sowohl der Pegel des ersten als auch das zweiten Nachweissignals mit dem vorgegebenen Pegel identisch werden;

(j) Haltemittel (36, 37), um einen Gipfelwert der höheren harmonischen Teilschwingung im Ansprechen auf eine Zeitsteuerung des zweiten Nachweissignals zu halten;

(k) Analog/Digital-Wandlermittel (38), um den Gipfelwert der höheren harmonischen Teilschwingung in die Impulsstärke repräsentierende Digitaldaten umzuwandeln; und

(l) Zentralrechnermittel (39), um die Digitaldaten in eine Tonhöhe eines Musiktones repräsentierende Tonhöhedaten im Ansprechen auf die Zeitsteuerung des Unterbrechungssignals umzuwandeln.

13. Musiktonsteuervorrichtung nach Anspruch 12, bei der die Beschleunigungssensormittel (11) einen Schwingungserzeuger aufweisen, der aus einem anorganischen Material, wie beispielsweise einem Piezokunststoff mit piezoelektrischen Eigenschaften, hergestellt ist.

14. Musiktonsteuervorrichtung nach Anspruch 13, bei der die ersten Nachweismittel folgendes aufweisen:

(a) erste Tiefpaßfiltermittel (14), um ein erstes Signal aus dem Ausgabesignal der Beschleunigungssensormittel auszufiltern, wobei die ersten Tiefpaßfiltermittel eine erste Zeitkonstante aufweisen;

(b) zweite Tiefpaßfiltermittel (18), um ein zweites Signal aus dem Ausgabesignal der Beschleunigungssensormittel auszufiltern, wobei die zweiten Tiefpaßfiltermittel eine zweite Zeitkonstante aufweisen, die größer als die erste Zeitkonstante ist;

(c) Mittel (19, 20) zur Erzeugung des ersten Vergleichssignales auf der Grundlage einer vorgegebenen ersten Referenzspannung und des zweiten Signals; und

(d) Vergleichmittel (15), um den Pegel des ersten Signals und den des ersten Vergleichsignals zu vergleichen, so daß das erste Nachweissignal mit einem vorgegebenen Pegel ausgegeben wird, während der Pegel des ersten Signals höher wird als der des ersten Vergleichsignals.

15. Musiktonsteuervorrichtung nach Anspruch 14, bei der die zweite Zeitkonstante annähemd auf das Zehnfache der ersten Zeitkonstante eingestellt ist.

16. Musiktonsteuervorrichtung nach Anspruch 12, 14 oder 15, bei der die Verstärkermittel folgendes aufweisen:

(a) Hochpaßfiltermittel (27), um die höhere harmonische Teilschwingung aus dem Ausgabesignal der Beschleunigungssensormittel auszufiltern; und

(b) einen Verstärker (25) zur Verstärkung der höheren harmonischen Teilschwingung.

17. Musiktonsteuervorrichtung nach Anspruch 16, bei der die zweiten Nachweismittel folgendes aufweisen:

(a) dritte Tiefpaßfiltermittel (33), um ein drittes Signal aus dem Ausgabesignal der Beschleunigungssensormittel (11) auszufiltern;

(b) Mittel (31, 34) zur Erzeugung des zweiten Vergleichssignals auf der Grundlage einer vorgegebenen zweiten Referenzspannung und des dritten Signals; und

(c) Vergleichmittel (29), um den Pegel des zweiten Vergleichssignals und den des Ausgabepegels der Verstärkermittel zu vergleichen, so daß das zweite Nachweissignal mit einem vorgegebenen Pegel ausgegeben wird, während der Ausgabepegel der Verstärkermittel höher wird als der des zweiten Vergleichssignals.

18. Musiktonsteuervorrichtung nach Anspruch 17, bei der die Unterbrechungssignalerzeugungsmittel aufweisen:

(a) Flip-Flopmittel (23) zur Speicherung des ersten Nachweissignals im Ansprechen auf eine Zeitsteuerung des zweiten Nachweissignals, wobei die Flip-Flopmittel durch die Zentralrechnermittel (39) zurückgestellt werden, wenn sowohl der Pegel des ersten als auch des zweiten Nachweissignals gleich einem Pegel werden, der nicht der vorgegebene Pegel ist; und

(b) UND-Gattermittel (22) zur Erzeugung des Unterbrechungssignals mit Hilfe des ersten Nachweissignals und des Ausgabesignals der Flip-Flopmittel auf der Grundlage einer UND-Operation.

19. Musiktonsteuervorrichtung nach Anspruch 12, bei der die Haltemittel aufweisen:

(a) Analogschaltermittel (36), um das Ausgabesignal der Verstärkermittel jedesmal durchzuleiten, wenn der Pegel des zweiten Nachweissignals gleich dem vorgegebenen Pegel wird, wobei die Analogschaltermittel abgeschaltet werden, während der Pegel des zweiten Nachweissignals gleich einem Pegel wird, der nicht der vorgegebene Pegel ist; und

(b) Kondensatormittel (37), um den Ausgangspegel der Analogschaltermittel zu halten.

20. Musiktonsteuervorrichtung nach Anspruch 1 oder 2, bei der das Objekt ein vorgegebener Teil eines menschlichen Körpers ist und die Musiktonsteuervorrichtung folgendes aufweist, um ein Musiktonsignal auf der Grundlage einer Impulsstärke jedesmal zu erzeugen dann, wenn der vorgegebene Teil mit einem anderen Gegenstand zusammenstößt:

(b) erste Nachweismittel (14, 15, 18, 19, 20), um ein erstes Nachweissignal mit vorgegebenem Pegel auszugeben, während ein Ausgabepegel der Beschleunigungssensormittel höher als ein Pegel des ersten Vergleichssignals wird;

(c) Verstärkermittel (25, 27) zur Verstärkung einer in dem Ausgabesignal des Beschleunigungssensors enthaltenen höheren harmonischen Teilschwingung;

(d) zweite Nachweismittel (29, 31 33, 34), um ein zweites Nachweissignal mit vorgegebenem Pegel auszugeben, während der Ausgabepegel der Verstärkermittel höher wird als ein Pegel eines zweiten Vergleichssignals;

(e) Unterbrechungssignalerzeugungsmittel (22, 23) zur Erzeugung eines Unterbrechungssignals, welches anzeigt, daß sowohl der Pegel des ersten als auch des zweiten Nachweissignals gleich dem vorgegebenen Pegel wird;

(f) Haltemittel (36, 37), um einen Gipfelwert der höheren harmonischen Teilschwingung im Ansprechen auf eine Zeitsteuerung des zweiten Nachweissignals zu halten;

(g) Analog/Digital-Wandlermittel (38), um den Gipfelwert der höheren harmonischen Teilschwingung in die Impulsstärke repräsentierende Digitaldaten umzuwandeln;

(h) Zentralrechnermittel (39), um die Digitaldaten in eine Tonhöhe eines Musiktones repräsentierende Tonhöhedaten im Ansprechen auf die Zeitsteuerung des Unterbrechungssignals umzuwandeln; und

(i) Musiktonerzeugungsmittel (41, 43) zur Erzeugung eines Musiktones auf der Grundlage der Tonhöhedaten.

21. Musiktonsteuervorrichtung mit

(a) Nachweismitteln (Sa), um den Beschleunigungsgrad, der im Ansprechen auf eine Bewegung eines Objektes erzeugt wird, nachzuweisen;

(b) mit den Nachweismitteln (Sa) verbundenen Musiktonsteuermitteln (126-131) zur Erzeugung von Musiktonsteuerdaten im Ansprechen auf den festgestellten Beschleunigungsgrad; und

(c) mit den Musiktonsteuermitteln (126-131) verbundenen Musiktonerzeugungsmitteln (132) zur Erzeugung eines Musiktonsignals im Ansprechen auf die Musiktonsteuerdaten, gekennzeichnet durch

(a) eine erste Integrationsschaltung (102), um ein von dem Beschleunigungsdetektor (Sa) ausgegebenes Beschleunigungssignal (Al) so zu integrieren, daß das Beschleunigungssignal in ein eine Bewegungsgeschwindigkeit des Objektes repräsentierendes Geschwindigkeitssignal umgewandelt wird;

(b) eine zweite Integrationsschaltung (108), um ein Geschwindigkeitssignal so zu integrieren, daß das Geschwindigkeitssignal in ein eine Bewegungsdistanz des Objektes repräsentierendes Distanzsignal umgewandelt wird;

(c) Steuermittel (CTL), um Integrationsvorgänge der ersten und der zweiten Integrationsschaltung (102, 108) auf der Grundlage eines Pegels des Beschleunigungssignals in einem Zeitraum zu steuern, in dem die Beschleunigung des Objektes zunimmt, und um ein Unterbrechungssignal auszugeben, wenn der Zeitraum der Beschleunigungszunahme beendet ist; wobei diese Musiktonsteuermittel (126-131) Mittel (126-129, 131) enthalten, die die Geschwindigkeit- und Distanzsignale umwandeln und speichern und an die Musiktonerzeugungsmittel (132) als Steuerdaten ausgeben, um die Eigenschaften eines dabei zu erzeugenden Musiktones zu steuern.

22. Musiktonsteuervorrichtung nach Anspruch 21, bei der die erste Integrationsschaltung (102) einen ersten Operationsverstärker (103), einen ersten Widerstand (104) und einen ersten Kondensator (105) aufweist, und die zweite Integrationsschaltung (108) einen zweiten Operationsverstärker (109), einen zweiten Widerstand (111) und einen zweiten Kondensator (112) aufweist, wobei das Beschleunigungssignal dem invertierenden Eingabeanschluß des ersten Operationsvertärkers über den ersten Widerstand eingegeben wird, der erste Kondensator zwischen den invertierenden Eingabeanschluß und einen Ausgabeanschluß des ersten Operationsverstärkers mit geerdetem nichtinvertierendem Eingabeanschluß geschaltet ist, das von dem Ausgabeanschluß des ersten Operationsverstärker ausgegebene Geschwindigkeitssignal dem invertierenden Eingabeanschluß des zweiten Operationsverstärkers über den zweiten Widerstand eingegeben wird, der zweite Kondensator zwischen den invertierenden Eingabeanschluß und einen Ausgabeanschluß des zweiten Operationsverstärkers mit geerdetem nichtinvertierenden Eingabeanschluß geschaltet ist, und das Distanzsignal von dem Ausgabeanschluß des zweiten Operationsverstärkers ausgegeben wird.

23. Musiktonsteuervorrichtung nach Anspruch 21, die außerdem folgendes aufweist:

(f) zweite Integrationsmittel (108), um das Geschwindigkeitssignal so zu integrieren, daß das Geschwindigkeitssignal in ein eine Bewegungsdistanz des Objektes repräsentierendes Distanzsignal umgewandelt wird;

(g) Steuermittel (106, 113, 116, 122) zur Steuerung der Integrationsvorgänge der ersten und zweiten Integrationsmittel auf der Grundlage der Höhe des festgestellten Grades der Beschleunigung in einem vorgegebenen Zeitraum; und

(h) die Musiktonerzeugungsmittel (132) zur Erzeugung eines dem Distanzsignal entsprechenden Musiktonsignals.

24. Musiktonsteuervorrichtung nach Anspruch 23, bei der der vorgegebene Zeitabschnitt gleich einem Zeitabschnitt ist, in dem die Beschleunigung des Objektes zunimmt.

25. Musiktonsteuervorrichtung nach Anspruch 21 oder 23, bei der die Steuermittel folgendes enthalten:

(a) Mittel (116) zur Ausgabe eines Impulssignals, dessen Impulsbreite einem Zeitraum entspricht, in welchem die Beschleunigung des Objektes zunimmt;

(b) Verzögerungsmittel (122), um eine abfallende Flanke des Impulssignals so zu verzögern, daß die Impulsbreite des Impulssignals um eine vorgegebene Zeit vergrößert wird; und

(c) Integrationssteuermittel (106, 113), um die Intregrationsvorgänge der ersten und der zweiten Integrationsschaltungen (102, 108) zu steuern, wobei die erste und die zweite Integrationsschaltung ihre Integrationsvorgänge während der Periode einer Impulsbreite eines Ausgabesignals der Verzögerungsmittel durchführen.

26. Musiktonsteuervorrichtung nach Anspruch 25, bei der die Integrationssteuermittel aus ersten und zweiten Reed-Relais bestehen, wobei der erste Kondensator (105) zwischen beide Kontakte des ersten Reed-Relais (106) geschaltet ist, der zweite Kondensator (112) zwischen beide Kontakte des zweiten Reed-Relais (113) geschaltet ist, die Kontakte des ersten und zweiten Reed-Relais in der Impulsbreitenperiode des Ausgabesignals der Verzögerungsmittel geöffnet werden und, die Kontakte des ersten und zweiten Reed-Relais in einer Periode, die nicht die Impulsbreitenperiode ist, geschlossen werden.

27. Musiktonsteuervorrichtung nach Anspruch 25, bei der die Integrationssteuermittel (116) folgendes aufweisen:

(a) eine Integrationsschaltung (119, 120) zur Verzögerung des Beschleunigungssignals; und

(b) einen Vergleicher (117), um den Pegel des Beschleunigungssignals und den eines von der Integrationsschaltung ausgegebenen verzögerten Beschleunigungssignals zu vergleichen, so daß das Impulssignal ausgegeben wird, dessen Impulsbreite eine Periode darstellt, in der der Pegel des Beschleunigungssignals größer ist als der des verzögerten Beschleunigungssignals.

28. Musiktonsteuervorrichtung nach Anspruch 24, bei welcher die Steuermittel (CTL) die Integrationsvorgänge der ersten und der zweiten Integrationsmittel auf der Grundlage eines Pegels des nachgewiesenen Grades der Beschleunigung während einer Beschleunigungszunahmeperiode, in der die Beschleunigung des Objektes zunimmt, steuern.

**Revendications**

1. Dispositif de commande de son musical comprenant :

(a) un moyen de détection (11 ; 402) incluant un capteur d'accélération qui peut être monté sur, ou porté par, un membre d'un joueur pour détecter le degré d'accélération qui est produit en réponse à un mouvement dudit membre ;

(b) un moyen de commande de son musical (39 ; 450) relié au moyen de détection (11) pour produire une donnée de commande de son musical en réponse au degré d'accélération détecté ; et

(c) un moyen générateur de son musical (41 ; 460) relié au moyen de commande de son musical (39) pour produire un signal de son musical,

caractérisé en ce que :

(d) le moyen de commande de son musical est pourvu d'un moyen générateur de signal de départ pour produire un signal de départ (INT à la figure 16, Vi à la figure 1) qui déclenche la production de chaque son musical à chaque instant où le degré d'accélération détecté, ou la valeur de son intégrale par rapport au temps, a dépassé une valeur prédéterminée (Vref à la figure 16 Vr1 à la figure 1) ; et d'un moyen (36, 37, 38 ; 425, 427, 453, 430, 442, 452) pour produire des données de commande pour commander la caractéristique dudit son musical en se basant sur le mouvement dudit membre ; et,

(e) en ce que le moyen générateur de son musical comprend un moyen pour produire le signal de son musical correspondant au mouvement du membre en se basant sur la donnée de commande de son musical chaque fois que le signal de départ est produit pour déclencher la production de son musical.

2. Dispositif de commande de son musical selon la revendication 1, dans lequel le moyen de détection détecte un degré d'une accélération produite en réponse à un mouvement de balancement d'un objet.

3. Dispositif de commande de son musical selon la revendication 1, dans lequel ledit moyen de détection a une forme de bâton (402).

4. Dispositif de commande de son musical selon la revendication 2, dans lequel ladite donnée de commande de son musical représente un signal de départ (INT) indiquant un instant de départ pour produire un son musical.

5. Dispositif de commande de son musical selon la revendication 1, dans lequel ladite donnée de commande de son musical comprend une donnée indiquant un volume sonore et/ou un timbre.

6. Dispositif de commande de son musical selon la revendication 1 ou 2, comprenant, en outre, un moyen capteur (figures 26 à 29) pour détecter :

un paramètre de mouvement autre que celui dudit moyen de détection, la hauteur de son ou le timbre dudit signal de son musical étant commandé en se basant sur un résultat de détection dudit moyen capteur, et l'enveloppe dudit son musical étant commandée en se basant sur le résultat de détection dudit moyen de détection.

7. Dispositif de commande de son musical selon la revendication 1 ou 2, comprenant en outre :

(f) un premier moyen de détection (15) pour sortir un premier signal de détection lorsque le niveau de sortie dudit moyen capteur d'accélération devient plus élevé qu'un premier niveau prédéterminé ;

(g) un second moyen de détection (25, 29) pour sortir un second signal de détection lorsque le niveau d'une composante harmonique plus élevée incluse dans le signal de sortie dudit moyen capteur d'accélération devient plus élevé qu'un second niveau prédéterminé ;

(h) un moyen de maintien (36, 37) pour maintenir ledit niveau de composante harmonique plus élevée lorsque lesdits premier et second signaux de détection sont tous les deux sortis, respectivement, desdits premier et second moyens de détection ; et,

(i) un premier moyen (41) pour produire la première donnée de commande de son musical qui commande un signal de son musical en se basant sur le résultat de détection dudit premier moyen de détection.

8. Dispositif de commande de son musical selon la revendication 7, comprenant en outre un moyen de modification (39) pour modifier ou supprimer ladite première donnée de commande de son musical en se basant sur une donnée d'impulsion représentative d'une intensité d'impulsion détectée correspondant à un niveau de sortie dudit moyen de maintien.

9. Dispositif de commande de son musical selon la revendication 7, comprenant en outre un moyen de commande (39) pour commander ladite première donnée de commande de son musical en se basant sur une donnée d'impulsion représentative d'une intensité d'impulsion détectée correspondant à un niveau de sortie dudit moyen de maintien.

10. Dispositif de commande de son musical selon la revendication 7, comprenant en outre un second moyen (39) pour produire une seconde donnée de commande de son musical ($D_p$) autre que la-

dite première donnée de commande de son musical, en se basant sur une donnée d'impulsion représentative d'une intensité d'impulsion détectée correspondant à un niveau de sortie dudit moyen de maintien.

11. Dispositif de commande de son musical selon la revendication 10, dans lequel ladite seconde donnée de commande de son musical ($D_p$) représente un volume sonore, un timbre, ou une hauteur de son d'un son musical.

12. Dispositif de commande de son musical selon la revendication 1 ou 2, comprenant en outre :

(f) un premier moyen de détection (14, 15, 18, 19, 20) pour sortir un premier signal de détection dont le niveau devient un niveau prédéterminé lorsque le niveau de sortie dudit moyen capteur d'accélération devient plus élevé que le niveau d'un premier signal de référence ;

(g) un moyen amplificateur (25, 27) pour amplifier une composante d'harmonique plus élevée incluse dans le signal de sortie dudit capteur d'accélération ;

(h) un second moyen de détection (29, 31, 33, 34) pour sortir un second signal de détection dont le niveau devient un niveau prédéterminé lorsque le niveau de sortie dudit moyen amplificateur devient plus élevé que le niveau d'un second signal de référence ;

(i) un moyen générateur de signal d'interruption (22, 23) pour produire un signal d'interruption indiquant que les niveaux desdits premier et second signaux de détection deviennent tous les deux identiques audit niveau prédéterminé ;

(j) un moyen de maintien (36, 37) pour maintenir une valeur de pic de ladite composante harmonique plus élevée en réponse à la présence dudit second signal de détection ;

(k) un moyen convertisseur d'analogique en numérique (38) pour convertir ladite valeur de pic de ladite composante harmonique plus élevée en une donnée numérique représentant ladite intensité d'impulsion ; et,

(l) un moyen central de traitement (39) pour convertir ladite donnée numérique en une donnée de hauteur de son représentant la hauteur de son d'un son musical en réponse à la présence dudit signal d'interruption.

13. Dispositif de commande de son musical selon la revendication 12, dans lequel ledit moyen capteur d'accélération (11) possède un vibreur qui est fait d'une matière inorganique comme un piézoplastique ayant une propriété piézoélectrique.

14. Dispositif de commande de son musical selon la revendication 13, dans lequel ledit premier moyen de détection comprend :

(a) un premier moyen de filtrage passe-bas (14) pour extraire un premier signal dudit signal de sortie dudit moyen capteur d'accélération, ledit premier moyen de filtrage passe-bas ayant une première constante de temps ;

(b) un second moyen de filtrage passe-bas (18) pour extraire un second signal du signal de sortie dudit moyen capteur d'accélération, ledit second moyen de filtrage passe-bas ayant une seconde constante de temps qui est plus grande que ladite première constante de temps ;

(c) un moyen (19, 20) pour produire ledit premier signal de référence en se basant sur une première tension de référence prédéterminée et sur ledit second signal ; et,

(d) un moyen comparateur (15) pour comparer le niveau dudit premier signal et celui dudit premier signal de référence de manière à sortir ledit premier signal de détection dont le niveau devient ledit niveau prédéterminé lorsque le niveau dudit premier signal devient plus élevé que celui dudit premier signal de référence.

15. Dispositif de commande de son musical selon la revendication 14, dans lequel ladite seconde constante de temps est réglée approximativement à dix fois ladite première constante de temps.

16. Dispositif de commande de son musical selon la revendication 12, 14 ou 15, dans lequel ledit moyen amplificateur comprend :

(a) un moyen de filtrage passe-haut (27) pour extraire ladite composante harmonique plus élevée du signal de sortie dudit moyen capteur d'accélération ; et,

(b) un amplificateur (25) pour amplifier ladite composante harmonique plus élevée.

17. Dispositif de commande de son musical selon la revendication 16, dans lequel ledit second moyen de détection comprend :

(a) un troisième moyen de filtrage passe-bas (33) pour extraire un troisième signal du signal de sortie dudit moyen capteur d'accélération (11) ;

(b) un moyen (31 ; 34) pour produire ledit second signal de référence en se basant sur une seconde tension de référence prédéterminée et sur ledit troisième signal ; et,

(c) un moyen comparateur (29) pour comparer le niveau dudit second signal de référence et le niveau de sortie dudit moyen amplificateur de manière à sortir ledit second signal de détection dont le niveau devient ledit niveau prédéterminé lorsque le niveau de sortie dudit moyen amplificateur devient plus élevé que celui dudit second signal de référence.

18. Dispositif de commande de son musical selon la revendication 17, dans lequel ledit moyen générateur de signal d'interruption comprend :

(a) un moyen formant bascule (23) pour mémoriser ledit premier signal de détection en réponse à la présence dudit second signal de détection, ledit moyen formant bascule étant remis à zéro par ledit moyen central de traitement (39) lorsque les niveaux desdits premier et second signaux de détection deviennent tous les deux identiques à un niveau autre que ledit niveau prédéterminé ; et,

(b) un moyen formant porte ET (22) pour produire ledit signal d'interruption par utilisation dudit premier signal de détection et du signal de sortie dudit moyen formant bascule en se basant sur une opération ET.

19. Dispositif de commande de son musical selon la revendication 12, dans lequel ledit moyen de maintien comprend :

(a) un moyen interrupteur analogique (36) pour laisser passer le signal de sortie dudit moyen amplificateur chaque fois que le niveau dudit second signal de détection devient identique audit niveau prédéterminé, ledit moyen interrupteur analogique étant ouvert lorsque le niveau dudit second signal de détection devient identique à un niveau autre que ledit niveau prédéterminé ; et,

(b) un moyen condensateur (37) pour maintenir le niveau de sortie dudit moyen interrupteur analogique.

20. Dispositif de commande de son musical selon la revendication 1 ou 2 dans lequel l'objet est un membre prédéterminé d'un corps humain et dans lequel, de manière à produire un signal de son musical en se basant sur l'intensité d'une impulsion produite à un instant donné où le membre prédéterminé percute un autre objet, le dispositif comprend, en outre :

(b) un premier moyen de détection (14, 15, 18, 19, 20) pour sortir un premier signal de détection dont le niveau devient un niveau prédéterminé lorsque le niveau de sortie dudit moyen capteur d'accélération devient plus élevé que le niveau d'un premier signal de référence ;

(c) un moyen amplificateur (25, 27) pour amplifier une composante d'harmonique plus élevée incluse dans le signal de sortie dudit capteur d'accélération ;

(d) un second moyen de détection (29, 31, 33, 34) pour sortir un second signal de détection dont le niveau devient un niveau prédéterminé lorsque le niveau de sortie dudit moyen amplificateur devient plus élevé que le niveau d'un second signal de référence ;

(e) un moyen générateur de signal d'interruption (22, 23) pour produire un signal d'interruption indiquant que les niveaux desdits premier et second signaux de détection deviennent tous les deux identiques audit niveau prédéterminé ;

(f) un moyen de maintien (36, 37) pour maintenir une valeur de pic de ladite composante harmonique plus élevée en réponse à la présence dudit second signal de détection ;

(g) un moyen convertisseur d'analogique en numérique (38) pour convertir ladite valeur de pic de ladite composante harmonique plus élevée en une donnée numérique représentant ladite intensité d'impulsion ;

(h) un moyen central de traitement (39) pour convertir ladite donnée numérique en une donnée de hauteur de son représentant la hauteur de son d'un son musical en réponse à la présence dudit signal d'interruption ; et

(i) un moyen générateur de son musical (41, 43) pour produire un son musical en se basant sur ladite donnée de hauteur de son.

21. Dispositif de commande de son musical comprenant :

(a) un moyen de détection (Sa) pour détecter le degré d'accélération qui est produit en réponse à un mouvement d'un objet ;

(b) un moyen de commande de son musical (126 à 131) relié au moyen de détection (Sa) pour produire une donnée de commande de son musical en réponse au degré d'accélération détecté ; et

(c) un moyen générateur de son musical (132) relié au moyen de commande de son musical (126 à 131) pour produire un signal de son musical en réponse à la donnée de commande de son musical,

caractérisé par :

(a) un premier circuit d'intégration (102) pour intégrer un signal d'accélération (Al) sorti dudit détection d'accélération (Sa) de manière à convertir ledit signal d'accélération en un signal de vitesse représentant une vitesse de déplacement dudit objet ;

(b) un second circuit d'intégration (108) pour intégrer ledit signal de vitesse de manière à convertir ledit signal de vitesse en un signal de distance représentant une distance de déplacement dudit objet ;

(c) un moyen de commande (CTL) pour commander les actions d'intégration desdits premier et second circuits d'intégration (102, 108) en se basant sur le niveau dudit signal d'accélération dans une période où ladite accélération dudit objet est croissance, et pour sortir du signal d'interruption lorsque ladite période de croissance d'accélération prend fin ;

ledit moyen de commande de son musical (126 à 131) comprenant un moyen (126 à 129), 131, convertissant, mémorisant et sortant lesdits signaux de vitesse et de distance vers ledit moyen générateur de son musical (132) comme données de commande pour commander les caractéristiques d'un son musical qui doit être ainsi produit.

22. Dispositif de commande de son musical selon la revendication 21, dans lequel ledit premier circuit d'intégration (102) comprend un premier amplificateur opérationnel (103), une première résistance (104) et un premier condensateur (105) et dans lequel ledit second circuit d'intégration (108) comprend un second amplificateur opérationnel (109), une seconde résistance (111) et un second condensateur (112) ; ledit signal d'accélération étant entré sur une borne d'entrée inversante dudit premier amplificateur opérationnel par l'intermédiaire de ladite première résistance, ledit premier condensateur étant connecté entre ladite borne d'entrée inversante et une borne de sortie dudit premier amplificateur opérationnel dont la borne d'entrée non inversante est mise à la masse ; ledit signal de vitesse sorti de ladite borne de sortie dudit premier amplificateur opérationnel étant entré sur une borne d'entrée inversante dudit second amplificateur opérationnel par l'intermédiaire de ladite seconde résistance, ledit second condensateur étant connecté entre ladite borne d'entrée inversante et une borne de sortie dudit second amplificateur opérationnel dont la borne d'entrée non inversante est mise à la masse ; et ledit signal de distance étant sorti de ladite borne de sortie dudit second amplificateur opérationnel.

23. Dispositif de commande de son musical selon la revendication 21, comprenant en outre :

(f) un second moyen d'intégration (108) pour intégrer le signal de vitesse de manière à convertir le signal de vitesse en un signal de distance représentant une distance de déplacement de l'objet ;

(g) un moyen de commande (106, 113, 116, 122) pour commander les actions d'intégration des premier et second circuits d'intégration en se basant sur le niveau du degré d'accélération détecté dans une période prédéterminée ; et

(h) le moyen générateur de son musical (132) produisant un signal de son musical en fonction dudit signal de distance.

24. Dispositif de commande de son musical selon la revendication 23, dans lequel ladite période prédéterminée est identique à une période pendant laquelle ladite accélération dudit objet est croissante.

25. Dispositif de commande de son musical selon la revendication 21 ou 23, dans lequel ledit moyen de commande comprend :

(a) un moyen (116) pour sortir un signal impulsionnel dont la largeur d'impulsion correspond à une période dans laquelle ladite accélération dudit objet est croissante ;

(b) un moyen de retardement (122) pour retarder l'apparition du front arrière dudit signal impulsionnel de manière à agrandir ladite largeur d'impulsion dudit signal impulsionnel d'une durée prédéterminée ; et,

(c) un moyen de commande d'action d'intégration (106, 113) pour commander l'action d'intégration desdits premier et second circuits d'intégration (102, 108), lesdits premier et second circuits d'intégration effectuant leurs actions d'intégration pendant une période de largeur d'impulsion d'un signal de sortie dudit moyen de retardement.

26. Dispositif de commande de son musical selon la revendication 25, dans lequel ledit moyen de commande d'action d'intégration est constitué de premier et second relais à barrettes, ledit premier condensateur (105) étant connecté entre les deux contacts dudit premier relais à barrettes (106), ledit second condensateur (112) étant connecté entre les deux contacts dudit second relais à barrettes (113), les contacts desdits premier et second relais à barrettes étant ouverts dans la période de largeur d'impulsion du signal de sortie dudit moyen de retardement, les contacts desdits premier et second relais à barrettes étant fermés dans les périodes autres que ladite période de largeur d'impulsion.

27. Dispositif de commande de son musical selon la revendication 25, dans lequel ledit moyen de commande d'action d'intégration (116) comprend :

(a) un circuit d'intégration (119, 120) pour retarder ledit signal d'accélération ; et,

(b) un comparateur (117) pour comparer le niveau dudit signal d'accélération et celui d'un signal d'accélération retardé sorti dudit circuit d'intégration de manière à sortir ledit signal impulsionnel dont la largeur d'impulsion représente une période où le niveau dudit signal d'accélération est plus grand que celui dudit signal d'accélération retardé.

28. Dispositif de commande de son musical selon la revendication 24, dans lequel le moyen de commande (CTL) commande les actions d'intégration des premier et second moyens d'intégration en se basant sur le niveau du degré d'accélération détecté pendant une période de croissance d'accélération lorsque l'accélération de l'objet est croissante.

FIG.1

FIG.2

FIG.3

FIG.4

FIG.5

FIG.6

FIG.7

FIG.8

FIG.9

FIG.10

FIG.11

FIG.15

*305b* *305a* *304*

$X_1 \sim X_8$

$Y_1 \sim Y_{16}$

FIG.12

*306* *304*

*305b*

*305a*

$X_1 \sim X_8$

$Y_1 \sim Y_{16}$

FIG.13

FIG.14

EP 0 264 782 B1

FIG.16

FIG.17

FIG.18

START — SP1

OTHER
PROCESSES
(SWITCH SCAN) — SP2

*FIG.20A*

INTERRUPT — SP10

SIGNAL RS
OUTPUT — SP11

READ
VOL — SP12

OUTPUT
VOL TO TG — SP13

READ ATK — SP14

OUTPUT
ATK TO TG — SP15

KEY-ON
COMMAND FOR
TG — SP16

WAIT — SP17

READ
CLS — SP18

OUTPUT
CLS TO TG — SP19

RETURN — SP20

*FIG.20B*

42

FIG.19

FIG.21

FIG.22A

FIG.22B

AS₁ (AS₂)

482   483        481        480

FIG.24

AS₃
(AS₄)

FIG.25

FIG.23

FIG.26

498

IX

IY

IZ

FIG.27

IX(IY,IZ)    498

FIG.28